# EUROPEAN PATENT APPLICATION

(11) **EP 1 207 523 A2**
(43) Date of publication of application: **22.05.2002**
(21) Application number: 01307279.8
(22) Date of filing: 24.08.2001
(51) Int. Cl.: G11B 7/095

(54) **Error signal detection apparatus for optical recording/reproducing system**

(30) Priority: 17.11.2000 KR 2000068501
(71) Applicant: SAMSUNG ELECTRONICS CO., LTD., Suwon-City, Kyungki-do (KR)
(72) Inventor: Ma, Byung-in, Jangan-gu, Suwon-si, Gyeonggi-do (KR); Park, In-sik, 615-801 Shinnamushil Kukdong, Suwon-si, Gyeonggi-do (KR); Chung, Chong-sam, 718-1904 Salgugol Donga, Suwon-si, Gyeonggi-do (KR); Jeon, Jin-Hoon, 101-607 Seongwon, Suwon-gi, Gyeonggi-do (KR); Doh, Tae-yong, 144-1204 Hwanggol Jugong 1-danji, Suwon-si, Gyeonggi-do (KR); Choi, Byoung-ho, 43-502 Jugong 1-danji, Suwon-si, Gyeonggi-do (KR)
(74) Representative: Robinson, Ian Michael

(57) **Abstract**

An error signal detection apparatus for an optical recording/reproduction system, which is capable of accurately detecting a tangential tilt error signal, a radial tilt error signal, and/or a defocus signal, in consideration of the phase characteristics of each light beam portion reflected/diffracted from a recording medium, is provided. The error signal detection apparatus can accurately detect a tangential tilt error signal without being affected by radial tilt, defocus and detrack; a radial tilt error signal without being affected by tangential tilt, defocus and detrack; and/or a defocus error signal without being affected by tangential tilt, radial tilt and detrack.

## Description

The present invention relates to an error signal detection apparatus for an optical recording/reproducing system, and more particularly, to an error signal detection apparatus for an optical recording/reproducing system, which can detect a tangential tilt error signal and/or a radial tilt error signal with respect to a relative tilt between an objective lens and a recording medium, and/or a defocus error signal, using a main light beam for use in recording an information signal on or reproducing an information signal from the recording medium.

Optical pickups record an information signal on or reproduce an information signal from a recording medium, such as an optical disc seated on a turntable and rotating, while scanning the recording medium in the radial direction. However, if the rotating optical disc is tilted with respect to the optical axis, due to bending of the optical disc itself or error in loading the disc, degradation of a recording/reproduction signal can be caused.

When an optical pickup adopts a light source which emits a shorter wavelength of light, and an objective lens having a high numerical aperture (NA), for the purpose of increasing recording density, comma aberration caused by tilt of the optical disc increases, thereby further degrading the recording/reproduction signal. This is because optical aberration is proportional to λ/(NA)³.

In an optical recording/reproducing system for high-density recording and reproduction with a recording medium, such as a digital versatile disc (DVD) and/or next generation DVD (so-called high definition (HD)-DVD), there is a need for a tilt error signal detection apparatus for correcting a record/reproduction signal according to the relative tilt between the recording medium and the objective lens.

To accurately detect a radial tilt error signal, there is a need for the error signal detection apparatus for such an optical recording/reproducing system which can detect a radial tilt error signal without being influenced by tangential tilt, defocus, or detrack. To accurately detect a tangential tilt error signal, there is a need for the error signal detection apparatus for an optical recording/reproduction system which can detect a tangential tilt error signal without being affected by radial tilt, defocus, or detrack.

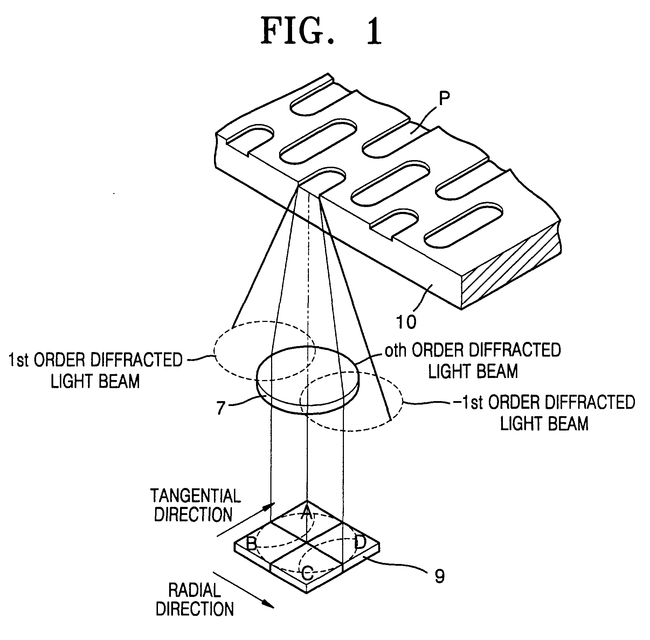

On the other hand, as shown in Figure 1, a light beam reflected by a recording medium 10, after having been focused as a light spot on the recording medium 10, is diffracted into a 0th order diffracted beam and ± 1st order diffracted beams by, for example, pits (P) formed on the recording medium 10. Thus, a photodetector 9 of an optical pickup, which is for detecting an information signal, receives the 0th order diffracted beam and ± 1st order diffracted beams. For the 0th order diffracted beam and ± 1st order diffracted beams received by the photodetector 9, the 0th order diffracted beam overlaps each of the ± 1st order diffracted beams which do not overlap each other. The detection signals from the overlapping portions between the 0th order diffracted beam and each of the ± 1st order diffracted beams, and a detection signal from the pure 0th order diffracted beam have different phase characteristics. That is, the phase characteristics of individual light beam portions reflected/diffracted by the recording medium 10 differ from one another. The phase characteristics of the detection signals vary according to the degree of tangential and/or radial tilt.

In a conventional error signal detection apparatus for detecting a tangential or radial tilt, a light beam reflected by the recording medium 10 is received as four divided light beams by the photodetector 9, which is divided into four sections. The four divided light beams are photoelectrically converted, separately, and the detection signals from the four divided light beams are summed or subtracted to detect a tangential or radial tilt error signal. Thus, the original phase characteristic according to position in the light beam, which is reflected/diffracted from the recording medium 10, cannot be reflected sufficiently in detecting a tangential or radial tilt error signal. As a result, the tangential or radial tilt error signal cannot be accurately detected.

On the other hand, when defocus occurs in recording data in a next generation DVD series recording medium for high-density recording, a method for compensating for the defocus is needed because the high-density recording medium is greatly affected by defocus compared to a conventional recording medium which uses a red laser beam. In other words, when a short-wavelength light source, for example, having a blue wavelength of 420 nm or less, and an objective lens having an NA of 0.6 or more are used for high-density recording, a defocus margin becomes smaller due to a small focus depth of an incident light beam. As a result, even if a small degree of defocus occurs, the problem of the defocus can be serious in terms of recording of data.

As is well known, when recording is performed on a DVD series recording medium, using a 650-nm light beam and an objective lens having an NA of 0.6, it is enough to control defocus with a variation of about 230 nm. However, when recording is performed on a next generation DVD series recording medium, which is so-called HD-DVD series recording medium, using a blue light and an objective lens having, for example, an NA of 0.85, there is a need to accurately control the defocus to be within the range of tens of nanometers.

To precisely control the defocus to be within the range of tens of nanometers for recording on a next generation DVD series recording medium, there is a need to detect a defocus error signal without being affected by detrack, and relative tangential and radial tilt between the objective lens and the recording medium.

It is an aim of the present invention to provide an error signal detection apparatus for an optical recording/reproducing system, which can accurately detect a tangential tilt error signal in consideration of the phase characteristics of light beam portions reflected/diffracted from an information stream of a recording medium, without being affected by radial tilt, defocus, and detrack.

It is a second aim of the present invention to provide an error signal detection apparatus for an optical recording/reproducing system, which can accurately detect a radial tilt error signal in consideration of the phase characteristics of light beam portions reflected/diffracted from an information stream of a recording medium, without being affected by tangential tilt, defocus, and detrack.

It is a third aim of the present invention to provide an error signal detection apparatus for an optical recording/reproducing system, which can accurately detect a defocus error signal in consideration of the phase characteristics of light beam portions reflected/diffracted from an information stream of a recording medium, without being affected by tangential and radial tilt, and detrack.

According to a first aspect of the present invention, there is provided an error signal detection apparatus for an optical recording/reproducing system, the apparatus comprising: a photodetecting unit for dividing at least a part of a light beam passed through an objective lens after having been reflected/diffracted from an information stream of a recording medium into a plurality of light beam portions, and detecting the plurality of light beam portions; and a signal processor for detecting a tangential error signal by detecting phase differences between detection signals from the plurality of light beam portions.

It is preferable that the photodetecting unit divides the light beam into first through fourth light beam portions in a direction corresponding to the radial direction of the recording medium, and detects and outputs first, second, fourth, and third detection signals from the first through fourth light beam portions; and the signal processor detects and outputs the tangential tilt error signal as the sum of a phase difference between the first and second detection signals, and a phase difference between the third and fourth detection signals.

It is preferable that the photodetecting unit divides a part of the light beam with respect to an axis crossing the optical axis parallel to the tangential direction of the recording medium into first through fourth light beam portions in directions corresponding to the radial and tangential directions of the recording medium, and detects the first through fourth light beam portions, the first through fourth light beam portions arranged counterclockwise or clockwise in order in a 2× 2 matrix, wherein the row and column of the matrix are parallel to directions corresponding to the radial and tangential directions of the recording medium, respectively; and the signal processor detects and outputs the tangential tilt error signal as the sum of a phase difference between the first and second detection signals from the first and third light beam portions, and a phase difference between the third and fourth detection signals from the second and fourth light beam portions.

According to a second aspect of the present invention, there is provided an error signal detection apparatus for an optical recording/reproduction apparatus, the apparatus comprising: a photodetecting unit for dividing at least a part of a light beam passed through an objective lens after having been reflected/diffracted from an information stream of a recording medium into a plurality of light beam portions, and detecting the plurality of light beam portions; and a signal processor for detecting a defocus error signal by detecting phase differences between detection signals from the plurality of light beam portions.

It is preferable that the photodetecting unit divides the light beam into first through fourth inner portions arranged counterclockwise or clockwise in directions corresponding to the radial and tangential directions of the recording medium, and into first through fourth outer portions which are outward in the first through fourth inner portions in a direction corresponding to the tangential direction of the recording medium, and detects the first through fourth inner and outer portions, wherein the first through fourth outer and inner portions are arranged in a 4× 2 matrix, the row and column of the matrix are parallel to directions corresponding to the radial and tangential directions of the recording medium, and the first inner and outer portions are arranged in a column different from the fourth inner and outer portions, and when the sum of detection signals from the first outer portion and the fourth inner portion is a first detection signal, the sum of detection signals from the fourth outer portion and the first inner portion is a second detection signal, the sum of detection signals from the second inner portion and the third outer portion is a third detection signal, and the sum of detection signals from the third inner portion and the second outer portion is a fourth detection signal, the signal processor detects the radial tilt error signal as the sum of a phase difference between the first and second detection signal, and a phase difference between the third and fourth detection signals.

According to a third aspect of the present invention there is provided an error signal detection apparatus for an optical recording/reproducing system, the apparatus comprising: a photodetecting unit for dividing at least a part of a light beam passed through an objective lens after having been reflected/diffracted from an information stream of a recording medium into a plurality of light beam portions, and detecting the plurality of light beam portions; and a signal processor for detecting a radial tilt error signal by detecting phase differences between detection signals from the plurality of light beam portions.

In one embodiment of the error signal detection apparatus, the photodetecting unit may divide the light beam into first through fourth light beam portions and detect first, second, fourth, and third detection signals from the first through fourth light beam portions, the first through fourth light beam portions arranged counterclockwise or clockwise in order in a 2× 2 matrix, wherein the row and column of the matrix are parallel to directions corresponding to the radial and tangential directions of the recording medium, respectively; and the signal processor may detect and output the defocus error signal as the sum of a phase difference between the first and second detection signals from the first and second light beam portions located in the same column of the matrix, and a phase difference between the third and fourth detection signals from the fourth and third light beam portions located in the other column of the matrix. In this case, it is preferable that, when the light beam is divided into a first outer portion, an intermediate light beam portion, and a second outer portion in a direction corresponding to the radial direction, the photodetecting unit divides the first and second outer portions of the light beam into first through fourth light beam portions, and detects the first through fourth light beam portions. It is preferable that, when the light beam is divided into a first outer portion, an intermediate light beam portion, and a second outer portion in a direction corresponding to the radial direction of the recording medium, the photodetecting unit divides the intermediate light beam portion of the light beam into first through fourth light beam portions, and detects the first through fourth light beam portions. It is preferable that the photodetecting unit is constructed such that the photodetecting unit divides the light beam into the first through fourth light beam portions and detects the first through fourth light beam portions.

In another embodiment of the error signal detection apparatus, when the light beam is divided into a first outer portion, an intermediate light beam portion, and a second outer portion in a direction corresponding to the tangential direction of the recording medium, the photodetecting unit may divide the first and second outer portions into first through fourth outer portions in a direction corresponding to the tangential direction of the recording medium, which are arranged counterclockwise or clockwise in order, and detect the first through fourth outer portions; and/or the intermediate light beam portion into first through fourth inner portions in directions corresponding to the radial and tangential directions of the recording medium, which are arranged counterclockwise or clockwise in order, and detect the first through fourth inner portions. The signal processor may detect the defocus error signal as the sum of a phase difference between a first detection signal from the first outer portion and/or the second inner portion and a second detection signal from the second outer portion and/or the first inner portion, and a phase difference between a third detection signal from the third inner portion and/or the fourth outer portion and a fourth detection signal from the third outer portion and/or the fourth inner portion.

In this case, it is preferable that the photodetecting unit divides the first and second outer portions of the light beam into first through fourth outer portions, and detects the first through fourth outer portions, and the first to fourth outer portions form a 2× 2 matrix, wherein the row and column of the matrix are parallel to directions corresponding to the radial and tangential directions of the recording medium, and the first and fourth outer portions are located in different columns; and the signal processor receives and processes the first, second, fourth, and third detection signals output from the first through fourth outer portions.

It is preferable that the photodetecting unit divides the intermediate portion of the light beam into the first through fourth inner portions, and detects the first through fourth inner portions, and the first through fourth inner portions form a 2× 2 matrix, wherein the row and column of the matrix are parallel to directions corresponding to the radial and tangential directions of the recording medium, and the first and fourth inner portions are located in different columns; and the signal processor receives and processes the second, first, third, and fourth detection signals output from the first through fourth inner portions.

It is preferable that the photodetecting unit divides the first and second outer portions of the light beam into the first through fourth outer portions arranged counterclockwise or clockwise in order parallel to a direction corresponding to the tangential direction of the recording medium, and detect the first through fourth outer portions; and the photodetecting unit divides the intermediate light beam portion into the first through fourth inner portions arrange counterclockwise or clockwise in order parallel to directions corresponding to the radial and tangential directions of the recording medium, and detects the first through fourth inner portions, wherein the first through fourth outer and inner portions are arranged in a 4× 2 matrix, the row and column of the matrix are parallel to directions corresponding to the radial and tangential directions of the recording medium, and the first and fourth outer portions are located in different columns, and the signal processor outputs the sum of a phase difference between the first detection signal, which is the sum of detection signals from the first outer portion and the second inner portions, and the second detection signal, which is the sum of detection signals from the second outer portion and the first inner portion; and a phase difference between the third detection signal, which is the sum of detection signals from the third inner portion and the fourth outer portion, and the fourth detection signal, which is the sum of detection signals from the third outer portion and the fourth inner portion.

In still another embodiment of the error signal detection apparatus, the photodetecting unit may divide the light beam into first through fourth light beam portions in a direction corresponding to the tangential direction of the recording medium, and detect and output first, second, fourth, and third detection signals from the first through fourth light beam portions. The signal processor may detect and output the defocus error signal as the sum of a phase difference between the first and second detection signals, and a phase difference between the third and fourth detection signals.

For a better understanding of the invention, and to show how embodiments of the same may be carried into effect, reference will now be made, by way of example, to the accompanying diagrammatic drawings in which:
Figure 1 illustrates a light beam reflected and diffracted from a recording medium;
Figure 2 illustrates an example of an optical pickup which adopts an error signal detection apparatus for an optical recording/reproducing system according to the present invention;
Figures 3 and 4 illustrate a first embodiment of an error signal detection apparatus for an optical recording/reproducing system according to the present invention;
Figures 5A through 5D are graphs illustrating a tangential tilt error signal Tₜᵢₗₜ output from the error signal detection apparatus of Figures 4, when a radial tilt, tangential tilt, defocus, and detrack occur, respectively;
Figures 6 and 7 illustrate a second embodiment of the error signal detection apparatus for an optical recording/reproducing system according to the present invention;
Figures 8A through 8D are graphs illustrating a tangential tilt error signal Tₜᵢₗₜ output from the error signal detection apparatus of Figures 7, when a radial tilt, tangential tilt, defocus, and detrack occur, respectively;
Figures 9 and 10 illustrate a third embodiment of the error signal detection apparatus for an optical recording/reproducing system according to the present invention;
Figures 11A through 11D are graphs illustrating a radial tilt error signal Rₜᵢₗₜ output from the error signal detection apparatus of Figures 10, when a radial tilt, tangential tilt, defocus, and detrack occur, respectively;
Figures 12 and 13 illustrate a fourth embodiment of the error signal detection apparatus for an optical recording/reproducing system according to the present invention;
Figures 14A through 14D are graphs illustrating a defocus error signal dFE output from the error signal detection apparatus of Figures 13, when a radial tilt, tangential tilt, defocus, and detrack occur, respectively;
Figures 15 and 16 illustrate a fifth embodiment of the error signal detection apparatus for an optical recording/reproducing system according to the present invention;
Figures 17 and 18 illustrate a sixth embodiment of the error signal detection apparatus for an optical recording/reproducing system according to the present invention;
Figure 19 illustrates a seventh embodiment of the error signal detection apparatus for an optical recording/reproducing system according to the present invention;
Figures 20A through 20D are graphs illustrating a defocus error signal dFE output from the error signal detection apparatus of Figures 19, when a radial tilt, tangential tilt, defocus, and detrack occur, respectively;
Figures 21 and 22 illustrate an eighth embodiment of the error signal detection apparatus for an optical recording/reproducing system according to the present invention;
Figures 23 and 24 illustrate a ninth embodiment of the error signal detection apparatus for an optical recording/reproducing system according to the present invention;
Figures 25 and 26 illustrates a tenth embodiment of the error signal detection apparatus for an optical recording/reproducing system according to the present invention;
Figures 27A through 27D are graphs illustrating a defocus error signal dFE output from the error signal detection apparatus of Figures 26, when a radial tilt, tangential tilt, defocus, and detrack occur, respectively;
Figure 28 illustrates an alternative embodiment of the signal processor applicable to the error signal detection apparatus of Figures 4, 7, 10, 13, 16, 18, 19, 22, 23 and/or 24; and
Figure 29 illustrates an alternative embodiment of the photodetecting unit applicable to the error signal detection apparatus of Figures 4, 7, 10, 13, 16, 18, 19, 22, 23 and/or 24.

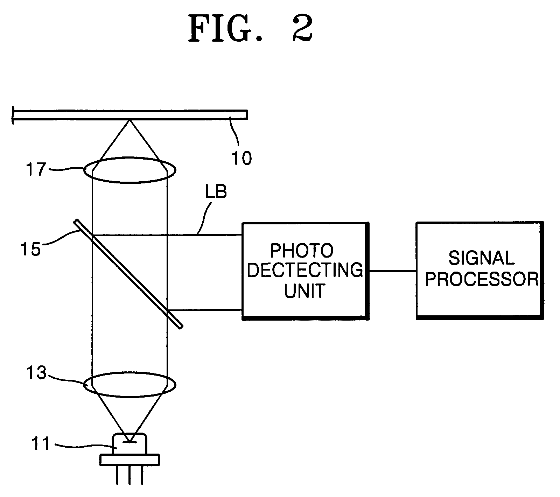

Referring to Figure 2, a preferred embodiment of an error signal detection apparatus for an optical recording/reproducing system according to the present invention receives a light beam LB passed through an objective lens 17 and an optical path changer 15, after having been reflected/diffracted from an information stream of a recording medium, and detects a tangential tilt error signal, radial tilt error signal, and/or defocus error signal from the received light beam LB. In Figure 2, reference numeral 11 denotes a light source, and reference numeral 13 denotes a collimating lens.

The error signal detection apparatus for an optical recording/reproducing system according to the present invention includes a photodetecting unit for dividing at least part of the light beam passed through the objective lens, after having been reflected/diffracted from an information stream of the recording medium, into a plurality of light beam portions, and detecting signals from the divided light beams; and a signal processor for detecting phase differences between the detection signals from the plurality of light beam portions to detect a tangential tilt, radial tilt, and/or defocus error signal.

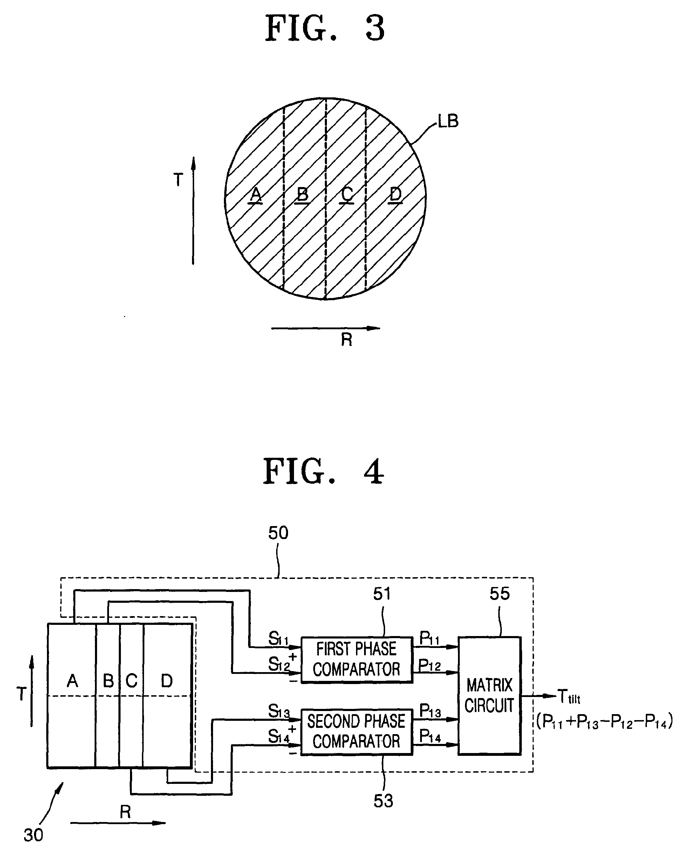

Referring to Figures 3 and 4, a first embodiment of an error signal detection apparatus for an optical recording/reproducing system according to the present invention includes a photodetecting unit for dividing a light beam LB passed through the objective lens 17, after having been reflected/diffracted from an information stream of the recording medium 10, into first thought fourth light beam portions A, B, C, and D in a direction (R direction) corresponding to the radial direction of the recording medium 10, and detecting and outputting first, second, fourth, and third detection signals S₁₁, S₁₂, S₁₄, and S₁₃; and a signal processor 50 for summing a phase difference between the first and second detection signals S11 and S12, and a phase difference between the third and fourth detection signals S13 and S14, and outputting the summed result. The error signal detection apparatus generates a tangential tilt error signal.

For example, the photodetecting unit of the first embodiment of the error signal detection apparatus according to the present invention may include a photodetector 30 having first through fourth light receiving sections A, B, C, and D, as shown in Figure 4, which are divided in the R direction, for dividing the light beam LB into first through fourth light beam portions A, B, C, and D, and separately and photoelectrically converting the first through fourth light beam portions A, B, C, and D. For convenience of explanation, in the present and following embodiments, the light beam portions of the light beam LB, and the light beam receiving sections of a photodetector for receiving the light beam portions are represented by the same reference numerals.

The first through fourth light beam receiving sections A, B, C, and D are long in a direction (T direction) corresponding to the tangential direction of the recording medium 10 with narrow widths in the R direction. The first through fourth light beam receiving sections A, B, C, and D of the photodetector separately and photoelectrically convert the first through fourth light beam portions A, B, C, and D of the light beam LB incident after having been reflected/diffracted from the recording medium 10, and detect the first, second, fourth, and third detection signals S₁₁, S₁₂, S₁₄, and S₁₃.

It is preferable that the photodetector 30 has eight light beam receiving sections obtained by dividing the first through fourth light beam receiving sections A, B, C, and D into two in the T direction.

In the present and following embodiments, the light beam LB incident on the photodetecting unit is a main light beam used to record information on the recording medium, or reproduce information from the recording medium. In the present embodiment and following embodiments, the photodetector used as a photodetecting unit is formed as a 2×4 or 4×2 matrix having eight sections, or at least as a 2×2 matrix having four sections, such that the photodetector can serve to detect an information signal recorded on the recording medium 10, as well as detect error signals.

For example, the signal processor 50 may include a first phase comparator 51 for receiving the first and second detection signals S₁₁ and S₁₂ and comparing the phases of the first and second detection signals S₁₁ and S₁₂, a second phase comparator 53 for receiving the third and fourth detection signals S₁₃ and S₁₄ and comparing the phases of the third and fourth detection signals S₁₃ and S₁₄, and a matrix circuit 55 for processing the detections signals output from the first and second phase comparators 53.

The first phase comparator 51 outputs a first phase comparison signal P₁₁ if the phase of the first detection signal S₁₁ leads the phase of the second detection signal S₁₂, and a second phase comparison signal P₁₂ if the phase of the second detection signal S₁₂ leads the phase of the first detection signal S₁₁. In a similar manner, the second phase comparator 53 outputs a third phase comparison signal P₁₃ if the phase of the third detection signal S₁₃ leads the phase of the fourth detection signal S₁₄, and a fourth phase comparison signal P₁₄ if the phase of the fourth detection signal S₁₄ leads the phase of the third detection signal S₁₃. The matrix circuit 55 receives the first through fourth phase comparison signals P₁₁, P₁₂, P₁₃, and P₁₄, and outputs a differential signal between the sum of the second and fourth phase comparison signals P₁₂ and P₁₄, and the sum of the first and third phase comparison signals P₁₁ and P₁₃, as a tangential tilt error signal Tₜᵢₗₜ ( = P₁₁+P₁₃-P₁₂-P₁₄).

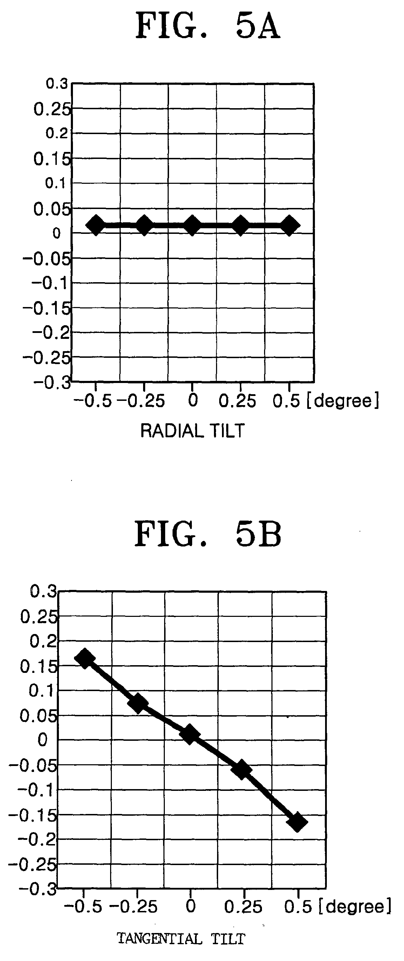

Figures 5A through 5D are graphs illustrating the signal Tₜᵢₗₜ output from the first embodiment of the error signal detection apparatus according to the present invention. In the graphs illustrating the output characteristics of the error signal detection apparatuses according to the present and following embodiments of the present invention, a light source having a wavelength (λ) of 400nm, an objective lens having an NA of 0.65, and a next generation DVD-ROM disc having a track pitch of 0.37 µm are used.

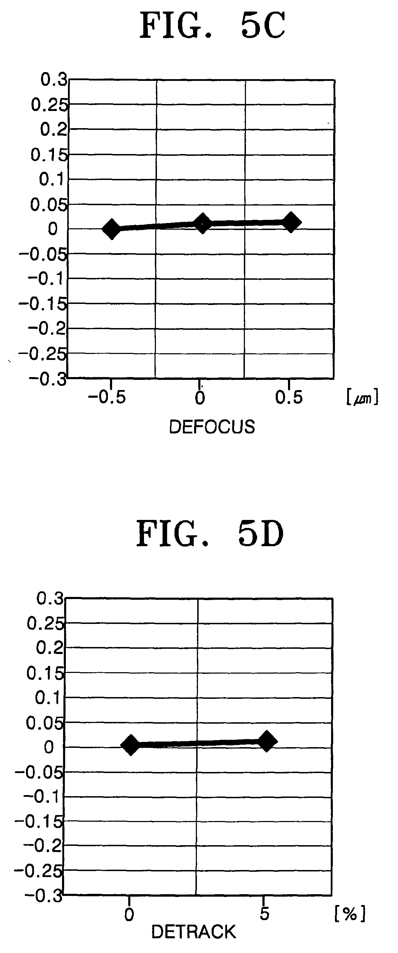

Figures 5A through 5D are graphs illustrating the signal Tₜᵢₗₜ output from the error signal detection apparatus according to the first embodiment of the present invention, when a radial tilt, tangential tilt, defocus, and detrack occur, respectively. In Figure 5D, the degree of detrack in the horizontal axis is represented by percentage with respect to the track pitch of the recording medium.

The signal Tₜᵢₗₜ detected by the error signal detection apparatus according to the first embodiment of the present invention is almost unaffected by radial tilt, defocus, and detrack, as shown in Figures 5A, 5C, and 5D, and is greatly affected by only tangential tilt, as shown in Figure 5B.

Thus, a tangential tilt error signal can be accurately detected without being affected by radial tilt, defocus, and detrack, using the error signal detection apparatus according to the first embodiment of the present invention.

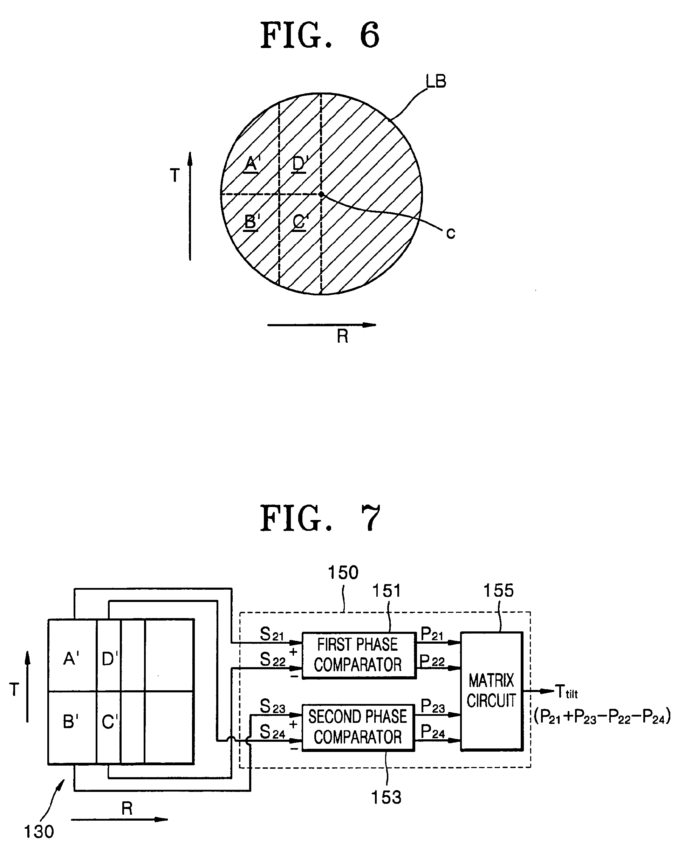

Referring to Figures 6 and 7, a second embodiment of the error signal detection apparatus according to the present invention includes a photodetecting unit, and a signal processor 150. The photodetecting unit divides a part of the light beam LB passed through the objective lens 17 after having been reflected/diffracted from an information stream of the recording medium 10, which corresponds to a half of the light beam, i.e. a semicircular portion if the light beam LB is circular, with respect to an axis crossing the optical axis c parallel to the T direction, into first through fourth light beam portions A', B', C', and D' along each of the T and R directions; detects first, third, second, and fourth detection signals S₂₁, S₂₃, S₂₂, and S₂₄ from the first through fourth light beam portions A', B', C', and D', respectively; and outputs the first, third, second, and fourth detection signals S₂₁, S₂₃, S₂₂, and S₂₄. The signal processor 150 outputs the sum signal of a phase difference between the first and second detection signal S₂₁ and S₂₂, and a phase difference between the third and fourth detection signals S₂₃ and S₂₄.

The first through fourth light beam portions A', B', C', and D' are formed as a 2 × 2 matrix and are arranged counterclockwise in order, wherein the row and column of the matrix are parallel to the R and T directions of the recording medium, respectively. It is preferable that the first light beam portion A' is located in the first row and first column. Alternatively, the first light beam portion A' may be located in the second row and second column.

Figure 7 shows an example in which the photodetecting unit of the error signal detection apparatus according to the second embodiment of the present invention includes a photodetector 130 formed as a 2 × 4 matrix having eight sections and an error signal is detected using the detection signals received by the first through fourth light beam receiving sections A', B', C', and D' which receive the first through fourth light beam portions A', B', C', and D', respectively. Here, the row and column of the matrix are parallel to the R and T directions of the recording medium, respectively.

The signal processor 150 includes a first phase comparator 151 for receiving the first and second detection signals S₂₁ and S₂₂, a second phase comparator 153 for receiving the third and fourth detection signals S₂₃ and S₂₄, and a matrix circuit 155. In the present and following embodiments, the structures of the first and second phase comparators and the matrix circuit, which process first through fourth detection signals, are substantially the same as those of the first embodiment described with reference to Figure 4, and thus descriptions of the signal processing by the first and second phase comparators will not be provided in the present and following embodiments.

The matrix circuit 155 receives the first and second phase comparison signals P₂₁ and P₂₂ output from the first phase comparator 151, and the third and fourth phase comparison signals P₂₃ and P₂₄ output from the second phase comparator 153, and outputs a differential signal between the sum of the first and third phase comparison signals P₂₁ and P₂₃, and the sum of the second and fourth phase comparison signals P₂₂ and P₂₄, as a tangential tilt error signal Tₜᵢₗₜ (= P₂₁+P₂₃-P₂₂-P₂₄).

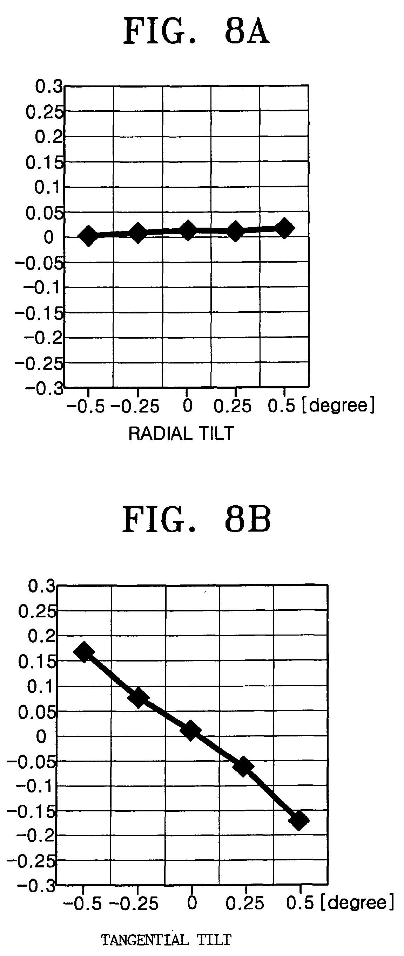

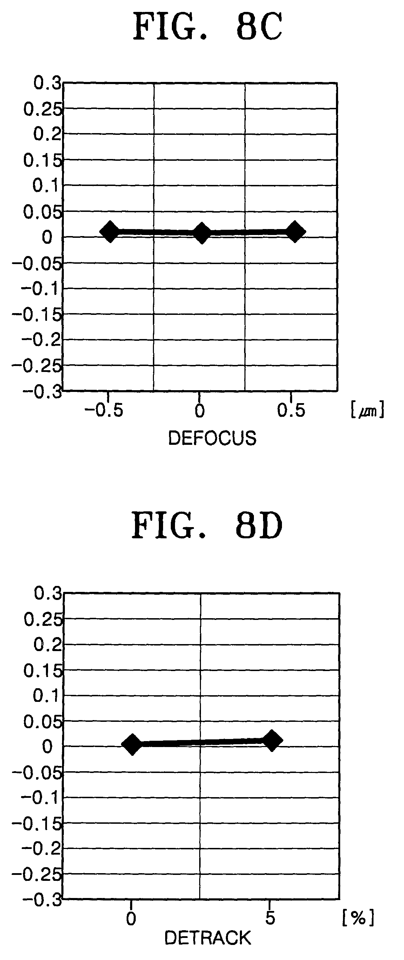

Figure 8A through 8D are graphs illustrating the signal Tₜᵢₗₜ output from the second embodiment of the error signal detection apparatus according to the present invention, when a radial tilt, tangential tilt, defocus, and detrack occur, respectively. Like the error signal detection apparatus according to the first embodiment of the present invention, the signal Tₜᵢₗₜ detected by the error signal detection apparatus according to the second embodiment of the present invention is almost unaffected by radial tilt, defocus, and detrack, as shown in Figures 8A, 8C, and 8D, and is greatly affected by only tangential tilt, as shown in Figure 8B.

Thus, a tangential error signal can be accurately detected without being affected by radial tilt, defocus, and detrack, using the error signal detection apparatuses according to the first and second embodiments of the present invention, which have the above structures.

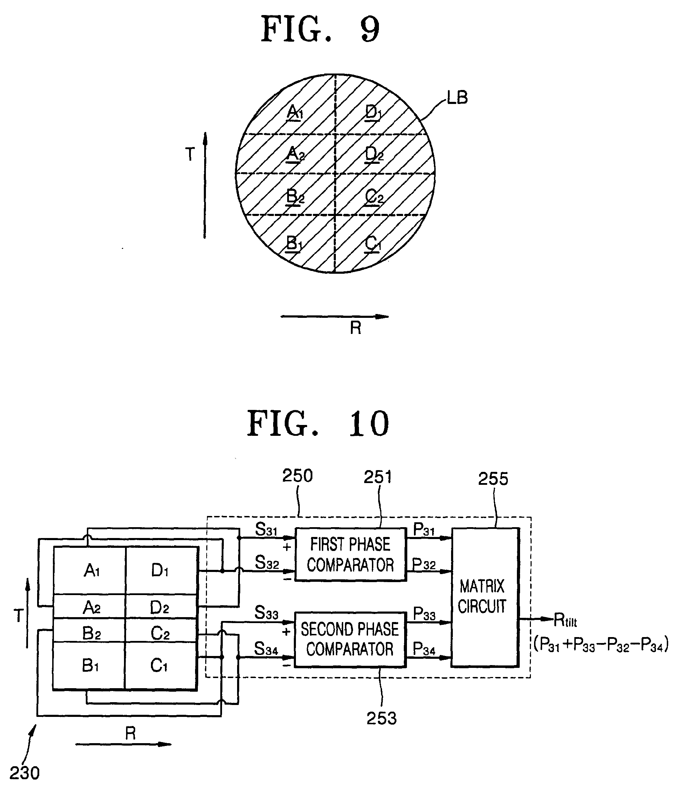

Referring to Figures 9 and 10, a third embodiment of the error signal detection apparatus according to the present invention includes a photodetecting unit and a signal processor 250 and the error signal detection apparatus detects a radial tilt error signal. The photodetecting unit divides the light beam LB passed through the objective lens 17, after having been reflected/diffracted from an information stream of the recording medium 10, into first through fourth inner portions A₂, B₂, C₂, and D₂ along each of the R and T directions, and first through fourth outer portions A₁, B₁, C₁, and D₁, and detects the divided light beam portions, wherein the first through fourth inner portions A₂, B₂, C₂, and D₂ are arranged counterclockwise in order, and the first through fourth outer portions A₁, B₁, C₁, and D₁ are arranged outward the first through fourth inner portions A₂, B₂, C₂, and D₂, respectively, in the T direction. The signal processor 250 outputs the sum signal of a phase difference between the first and second detection signals S₃₁ and S₃₂, and a phase difference between the third and fourth detection signals S₃₃ and S₃₄.

The first through fourth inner portions A₂, B₂, C₂, and D₂, and the first through fourth outer portions A₁, B₁, C₁, and D₁ are formed as a 4×2 matrix, wherein the row and column of the matrix are parallel to the R and T directions, respectively. It is preferable that the first outer portion A₁ is located in the first row and first column. Alternatively, the first outer portion A₁ may be located in the fourth row and second column.

As shown in Figure 10, the photodetecting unit of the error signal detection apparatus according to the third embodiment of the present invention may include a photodetector 230 formed as a 4×2 matrix having eight sections. Here, the row and column of the matrix are parallel to the R and T directions of the recording medium, respectively. The first through fourth inner light beam receiving sections A₂, B₂, C₂, and D₂ of the photodetector 230 detect the first through fourth inner portions A₂, B₂, C₂, and D₂, respectively. The first through fourth outer light beam receiving sections A₁, B₁, C₁, and D₁ detect the first through fourth outer light beam receiving sections A₁, B₁, C₁, and D₁, respectively.

The first detection signal S₃₁ is the sum of the detection signals from the first outer portion A₁ and the fourth inner portion D₂. The second detection signal S₃₂ is the sum of the detection signals from the fourth outer portion D₁ and the first inner portion A₂. The third detection signal S₃₃ is the sum of the detection signals from the second inner portion B₂ and the third outer portion C₁. The fourth detection signal S₃₄ is the sum of the detection signals from the third inner portion C₂ and the second outer portion B₁.

The signal processor 250 includes a first phase comparator 251 for receiving the first and second detection signals S₃₁ and S₃₂, a second phase comparator 253 for receiving the third and fourth detection signals S₃₃ and S₃₄, and a matrix circuit 255. The matrix circuit 255 receives the first and second phase comparison signals P₃₁ and P₃₂ output from the first phase comparator 251, and the third and fourth phase comparison signals P₃₃ and P₃₄ output from the second phase comparator 253, and outputs a differential signal between the sum of the first and third phase comparison signals P₃₁ and P₃₃, and the sum of the second and fourth phase comparison signals P₃₂ and P₃₄, as a radial tilt error signal Rₜᵢₗₜ (= P₃₁+P₃₃-P₃₂-P₃₄).

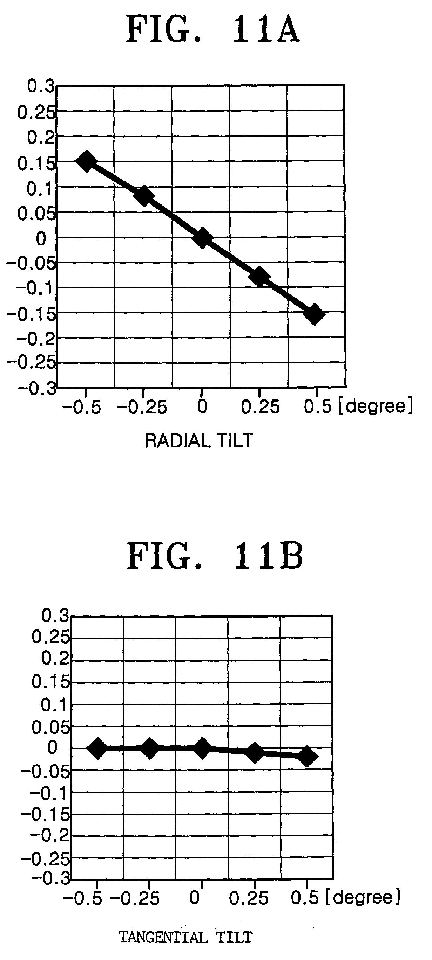

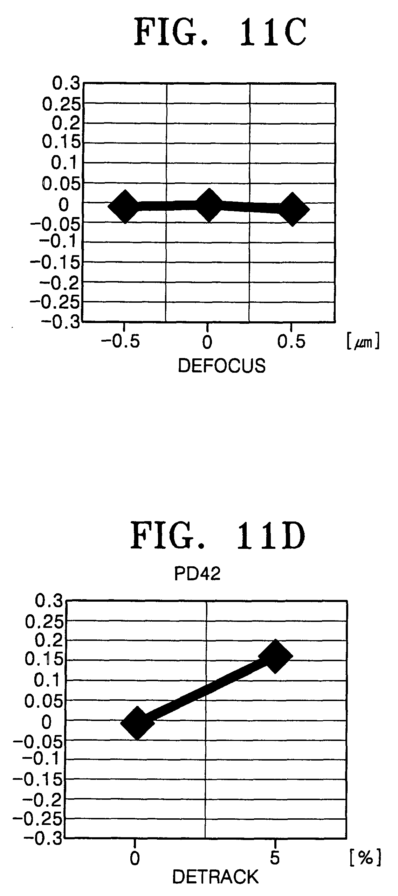

Figures 11A through 11D are graphs illustrating the signal Rₜᵢₗₜ output from the third embodiment of the error signal detection apparatus according to the present invention, when a radial tilt, tangential tilt, defocus, and detrack occur, respectively. The signal Rₜᵢₗₜ detected by the error signal detection apparatus according to the third embodiment of the present invention is almost unaffected by tangential tilt, defocus, and detrack, as shown in Figures 11B, 11C, and 11D, and is greatly affected by only radial tilt, as shown in Figure 11A.

Thus, a radial tilt error signal can be accurately detected without being affected by tangential tilt, defocus, and detrack, using the error signal detection apparatus according to the third embodiment of the present invention.

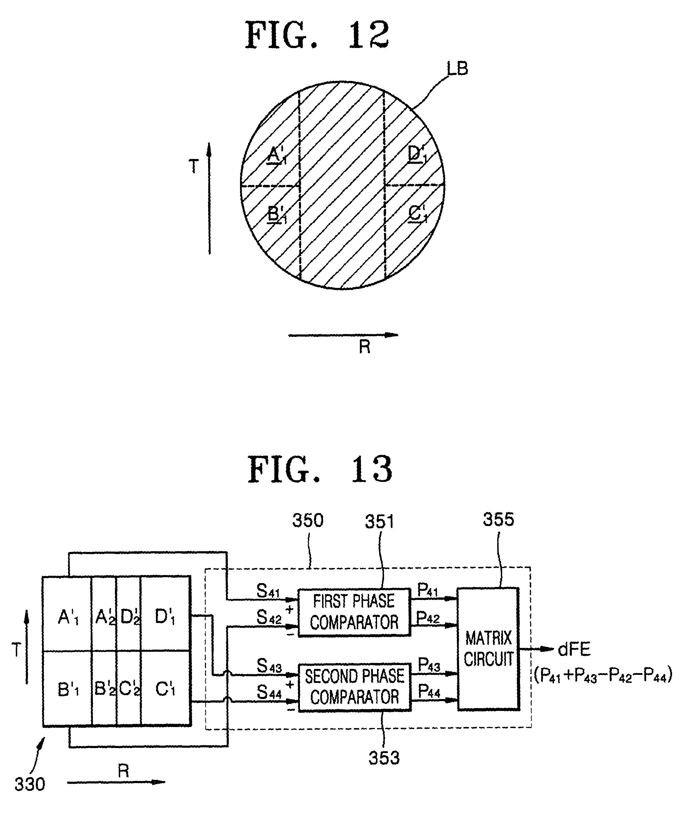

Referring to Figures 12 and 13, a fourth embodiment of the error signal detection apparatus according to the present invention, which detects a defocus error signal, includes a photodetecting unit, and a signal processor 350. The photodetecting unit detects first through fourth light beam portions A₁', B₁', C₁', and D₁' from a part of the light beam LB passed through the objective lens 17, after having been reflected/diffracted from an information stream of the recording medium 10, and outputs first, second, fourth, and third detection signals S₄₁, S₄₂, S₄₄, and S₄₃. The signal processor 350 outputs the sum signal of a phase difference between the first and second detection signals S₄₁ and S₄₂, and a phase difference between the third and fourth detection signals S₄₃ and S₄₄.

The first through fourth light beam portions A₁', B₁', C₁', and D₁' are formed as a 2× 2 matrix and are arranged counterclockwise in order, wherein the row and column of the matrix are parallel to the R and T directions, respectively. It is preferable that the first and second light beam portions A₁' and B₁' are located in the same column, and the third and fourth light beam portions C₁', and D₁' are located in the other column.

In the present embodiment, the first and fourth light beam portions A₁' and D₁' are separated a predetermined distance from each other in the R direction, and the second and third light beam portions B₁' and C₁' are separated a predetermined distance from each other in the R direction. In the present embodiment, assuming that the light beam LB is divided into a first outer portion, an intermediate light beam portion, and a second outer portion in the R direction, the photodetecting unit is constructed such that the photodetecting unit divides the first and second outer portions of the light beam LB into the first through fourth light beam portions A₁', B₁', C₁', and D₁' and detects the divided first through fourth light beam portions A₁', B₁', C₁', and D₁'.

As shown in Figure 13, the photodetecting unit of the error signal detection apparatus according to the fourth embodiment of the present invention may include a photodetector 330 formed as a 2×4 matrix. Here, the row and column of the matrix are parallel to the R and T directions of the recording medium, respectively. In Figure 13, a defocus error signal is detected using the detection signals from the first through fourth light beam portions A₁', B₁', C₁', and D₁' which are received by the first through fourth outer light beam receiving sections A₁', B₁', C₁', and D₁', respectively.

The signal processor 350 includes a first phase comparator 351 for receiving the first and second detection signals S₄₁ and S₄₂ detected from the first and second light beam portions A₁' and B₁', a second phase comparator 353 for receiving the third and fourth detection signals S₄₃ and S₄₄ detected from the fourth and third light beam portions D₁' and C₁', and a matrix circuit 355. The matrix circuit 355 receives the first and second phase comparison signals P₄₁ and P₄₂ output from the first phase comparator 351, and the third and fourth phase comparison signals P₄₃ and P₄₄ output from the second phase comparator 353, and outputs a differential signal between the sum of the first and third phase comparison signals P₄₁ and P₄₃, and the sum of the second and fourth phase comparison signals P₄₂ and P₄₄, as a defocus error signal dFE (= P₄₁+P₄₃-P₄₂-P₄₄).

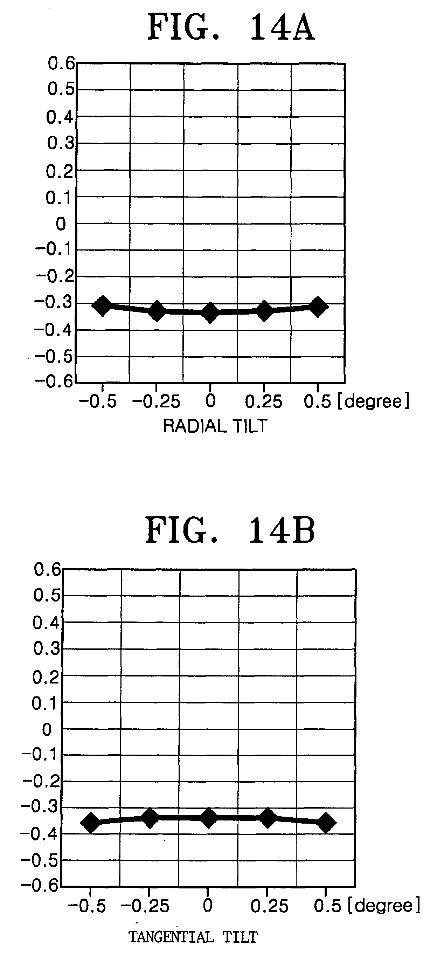

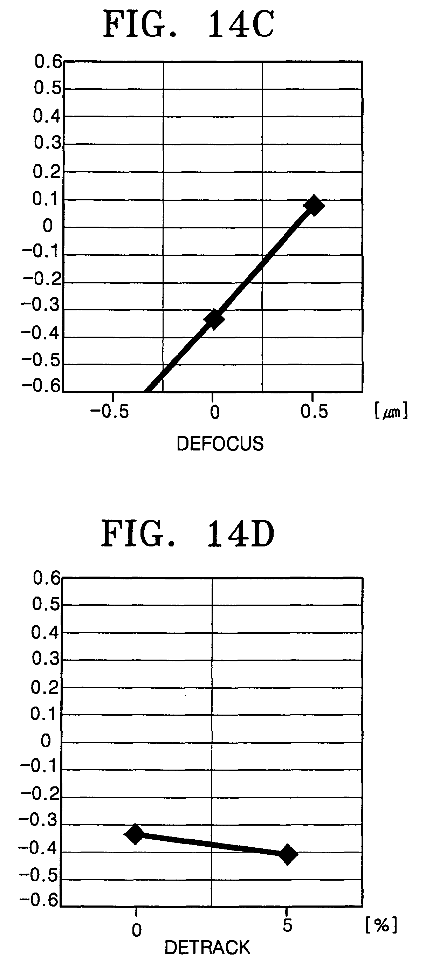

Figures 14A through 14D are graphs illustrating the signal dFE output from the fourth embodiment of the error signal detection apparatus according to the present invention, when a radial tilt, tangential tilt, defocus, and detrack occur, respectively. The signal dFE detected by the error signal detection apparatus according to the fourth embodiment of the present invention is almost unaffected by radial tilt, tangential tilt, and detrack, as shown in Figures 14A, 14B, and 14D, and is greatly affected by only defocus, as shown in Figure 14C.

Thus, a defocus error signal can be accurately detected without being affected by radial tilt, tangential tilt, and detrack, using the error signal detection apparatus according to the fourth embodiment of the present invention.

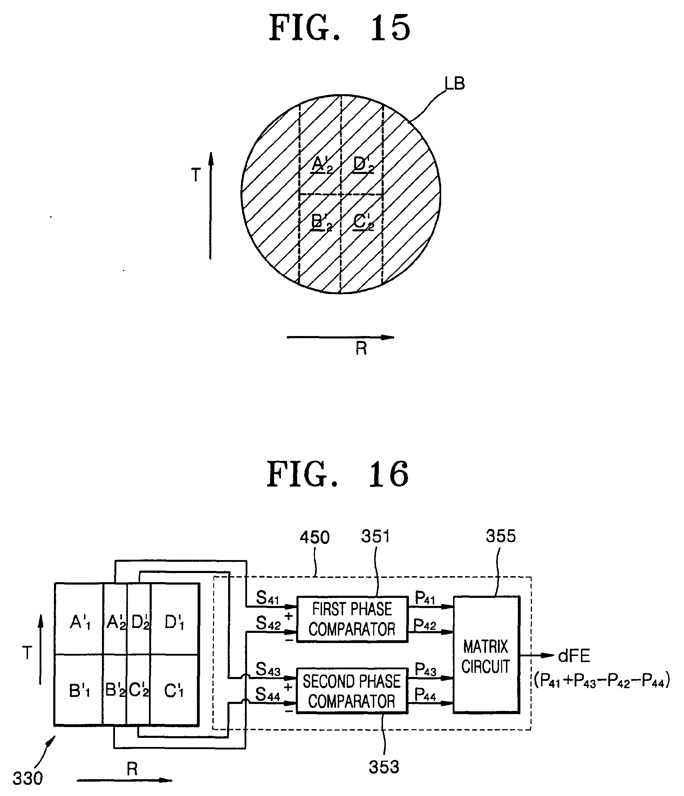

As shown in Figure 15, a fifth embodiment of the error signal detection apparatus according to the present invention may use the intermediate light beam portion of the light beam LB, instead of the first and second outer portions, to detect a defocus error signal. The fifth embodiment of the error signal detection apparatus according to the present invention detects the intermediate light beam portion of the light beam LB as divided first through fourth light beam portions A₂', B₂', C₂', and D₂', and detects a defocus error signal from the first through fourth light beam portions A₂', B₂', C₂', and D₂'. Here, the first through fourth light beam portions A₂', B₂', C₂', and D₂' of the intermediate light beam portion of the light beam LB correspond to the inner portions of the first through fourth light beam portions A₁', B₁', C₁', and D₁' in the R direction, which form the first and second outer portions of the light beam LB. When the photodetector 330 having eight sections, as shown in Figure 13, is used as a photodetecting unit, the first through fourth light beam portions A₂', B₂', C₂', and D₂' divided from the intermediate light beam portion of the light beam LB, as shown in Figure 16, are detected by the first through fourth inner light beam receiving sections A₂', B₂', C₂', and D₂', which are located inward the first through fourth outer light beam receiving portions A₁', B₁', C₁', and D₁' of Figure 13 in the R direction. The first, second, fourth, and third detection signals S₄₁, S₄₂, S₄₄, and S₄₃ detected by the first through fourth inner light beam receiving sections A₂', B₂', C₂', and D₂' are processed by the signal processor 450 in the same way described with reference to Figure 13, and are output as a defocus error signal dFE.

Here, the structure of the signal processor 450 is the same as the signal processor 350 of Figure 13, except that the detection signals detected by the first through fourth inner light beam receiving sections A₂', B₂', C₂', and D₂', instead of by the first through fourth outer light beam receiving sections A₁', B₁', C₁', and D₁', are received. For this reason, the first, second, fourth and third detection signals S₄₁, S₄₂, S₄₄, and S₄₃ detected by the first through fourth inner light beam receiving sections A₂', B₂', C₂', and D₂' are denoted by the same reference numerals as those detected by the first through fourth outer light beam receiving sections A₁', B₁', C₁', and D₁'. Also, a description of the signal processor 450 will not be provided.

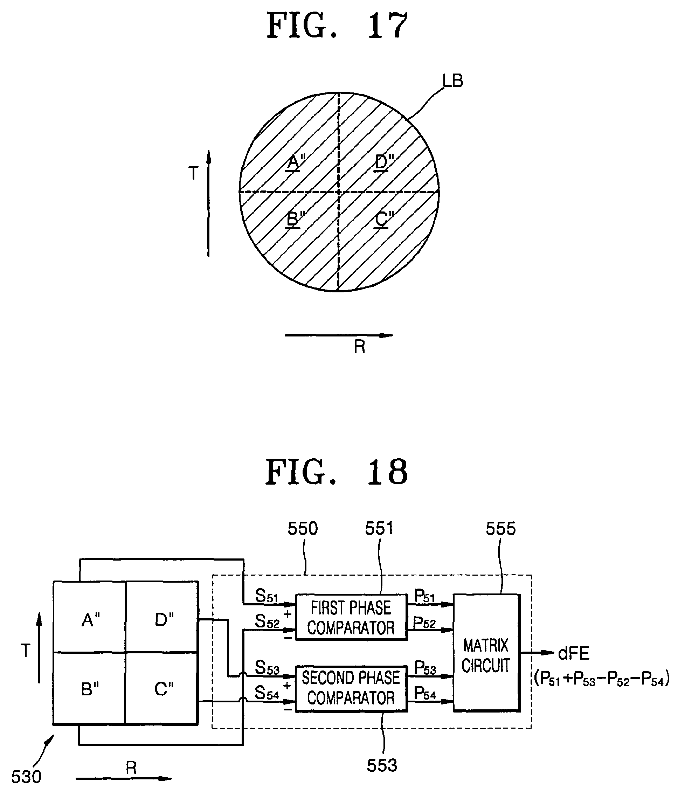

Referring to Figures 17 and 18, a sixth embodiment of the error signal detection apparatus according to the present invention divides the entire light beam LB into the first through fourth light beam portions A", B", C", and D" in the R and T directions, and detects the first through fourth light beam portions A", B", C", and D" to generate first, second, fourth, and third detection signals S₅₁, S₅₂, S₅₄, and S₅₃ from the first through fourth light beam portions A", B", C", and D", respectively. The error signal detection apparatus detects a defocus error signal by summing a phase difference between the first and second detection signals S₅₁ and S₅₂, and a phase difference between the third and fourth detection signals S₅₃ and S₅₄.

The first through fourth light beam portions A", B", C", and D" are formed as a 2×2 matrix and are arranged counterclockwise in order, wherein the row and column of the matrix are parallel to the R and T directions, respectively. It is preferable that the first and second light beam portions A" and B" are located in the same column, and the third and fourth light beam portions C" and D" are located in the other column.

As shown in Figure 18, the photodetecting unit of the error signal detection apparatus according to the sixth embodiment of the present invention may include a photodetector 530 having four sections, i.e., first through fourth light beam receiving sections A", B", C", and D", which receive the first through fourth light beam portions A", B", C", and D", respectively.

The first and second detection signals S₅₁ and S₅₂ output from the first and second light beam receiving sections A" and B" are input to the first phase comparator 51 of the signal processor 550. The first phase comparator 551 outputs a first phase comparison signal P₅₁ if the phase of the first detection signal S₅₁ leads the phase of the second detection signal S₅₂, and a second phase comparison signal P₅₂ if the phase of the second detection signal S₅₂ leads the phase of the first detection signal S₅₁. The third and fourth detection signals S₅₃ and S₅₄ are input to the second phase comparator 553 of the signal processor 550. The second phase comparator 553 outputs a third phase comparison signal P53 if the phase of the third detection signal S₅₃ leads the phase of the fourth detection signal S₅₄, and a fourth phase comparison signal P₅₄ if the phase of the fourth detection signal S₅₄ leads the phase of the third detection signal S₅₃. The matrix circuit 555 receives the first through fourth phase comparison signals P₅₁, P₅₂, P₅₃, and P₅₄, and outputs a differential signal between the sum of the first and third phase comparison signals P₅₁ and P₅₃, and the sum of the second and fourth phase comparison signals P₅₂ and P₅₄, as a defocus error signal dFE (=P₅₁+P₅₂-P₅₃-P₅₄).

Like the error signal detection apparatus according to the fourth embodiment of the present invention, the error signal detection apparatuses according to the fifth and sixth embodiments of the present invention, which have the above structures, can detect a defocus error signal without being affected by radial tilt, tangential tilt, and detrack.

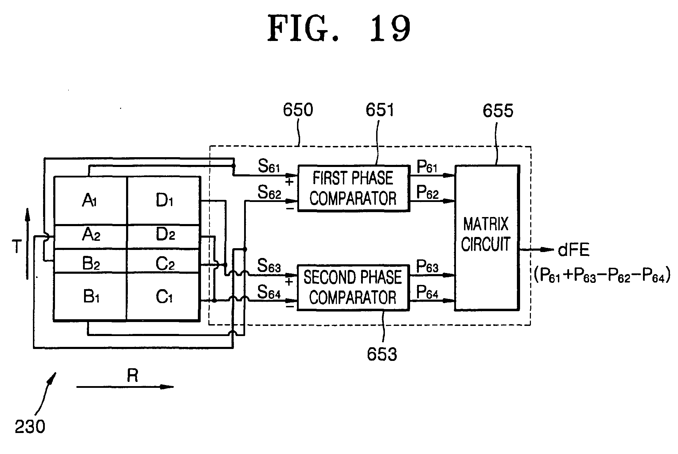

Referring to Figures 9 and 19, assuming that the light beam LB is divided into a first outer portion, an intermediate light beam portion, and a second outer portion in the T direction, a photodetecting unit of a seventh embodiment of the error signal detection apparatus according to the present invention, which includes all the divided configurations of the light beam portions to be described in the following eighth and ninth embodiments of the present invention, may be constructed such that the photodetecting unit divides the first and second outer portions of the light beam LB into first through fourth outer portions A₁, B₁, C₁, and D₁, and the intermediate light beam portion into first through fourth inner portions A₂, B₂, C₂, and D₂, and detects the eight light beam portions. The configuration of the divided light beam portions received by this photodetecting unit is the same as that of Figure 9.

The photodetecting unit of the error signal detection apparatus according to the seventh embodiment of the present invention may include a photodetector 230, which has the same structure as that of Figure 10. It is preferable that, in the 4× 2 matrix structure of the light beam LB, the first outer portion A₁ is located in the first row and first column. Alternatively, the first outer portion A₁ may be located in the fourth row and second column.

In the present embodiment, the signal processor 650 includes a first phase comparator 651 for receiving first and second detection signals S₆₁ and S₆₂, a second phase comparator 653 for receiving third and fourth detection signals S₆₃ and S₆₄, and a matrix circuit 655, so that the signal processor 650 outputs the sum of a phase difference between the first and second detection signals S₆₁ and S₆₂, and a phase difference between the third and fourth detection signals S₆₃ and S₆₄, as a defocus error signal dFE. The first detection signal S₆₁ is the sum of the detection signals from the first outer portion A₁ and the second inner portion B₂. The second detection signal S₆₂ is the sum of the detection signals from the second outer portion B₁ and the first inner portion A₂. The third detection signal S₆₃ is the sum of the detection signals from the fourth outer portion D₁ and the third inner portion C₂. The fourth detection signal S₆₄ is the sum of the detection signals from the fourth inner portion D₂ and the third outer portion C₁.

The matrix circuit 655 receives first and second phase comparison signals P₆₁ and P₆₂ output from the first phase comparator 651, and third and fourth phase comparison signal P₆₃ and P₆₄ output from the second phase comparator 653, and outputs a differential signal between the sum of the first and third phase comparison signals P₆₁ and P₆₃, and the sum of the second and fourth phase comparison signals P₆₂ and P₆₄, as a defocus error signal dFE(=P₆₁+P₆₃-P₆₂-P₆₄).

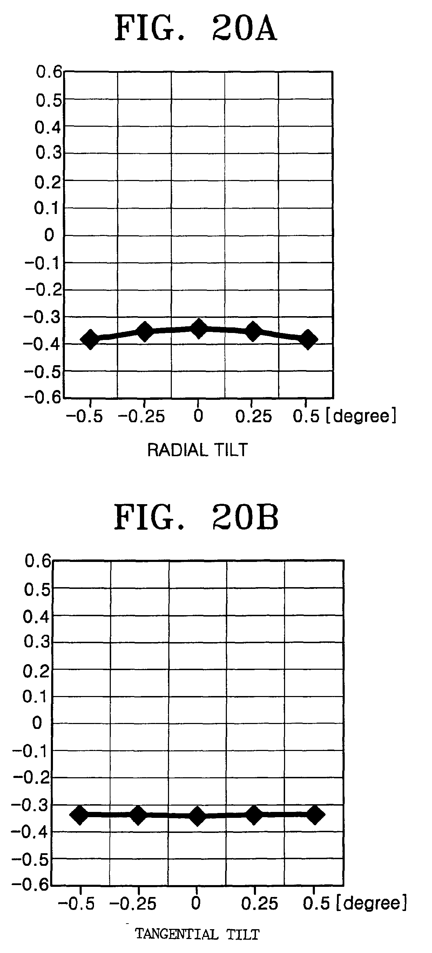

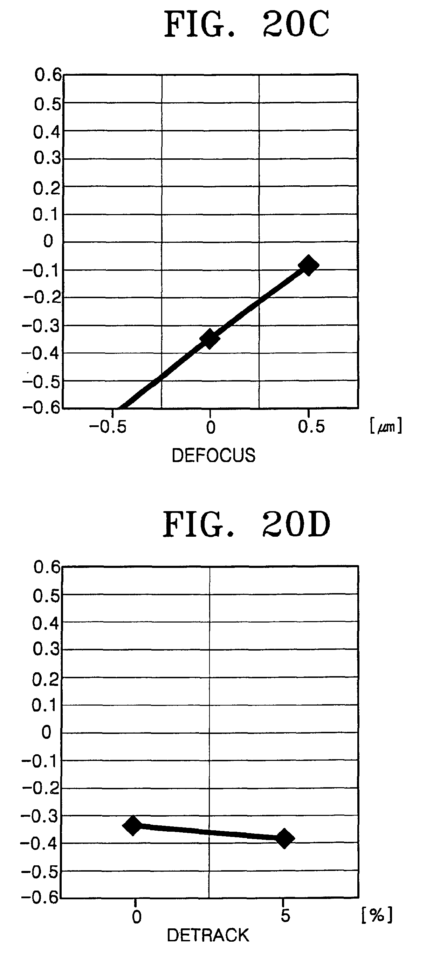

Figures 20A through 20D are graphs illustrating the signal dFE output from the error signal detection apparatus according to the seventh embodiment of the present invention, when a radial tilt, tangential tilt, defocus, and detrack occur, respectively. The signal dFE detected by the error signal detection apparatus according to the seventh embodiment of the present invention is almost unaffected by radial tilt, tangential tilt, and detrack, as shown in Figures 20A, 20B, and 20D, and is greatly affected by only defocus, as shown in Figure 20C.

Thus, a defocus error signal can be accurately detected without being affected by radial tilt, tangential tilt, and detrack, using the error signal detection apparatus according to the seventh embodiment of the present invention having the above structure.

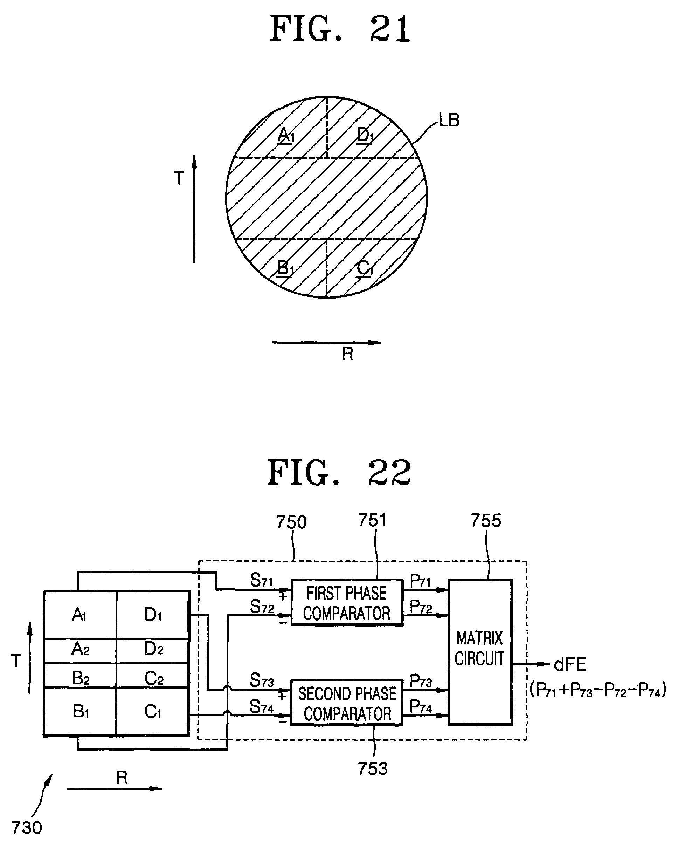

Referring to Figures 21 and 22, an eighth embodiment of the error signal detection apparatus according to the present invention includes a photodetecting unit and a signal processor 750 and detects a defocus error signal. The photodetecting unit detects the outer portions, i.e., the first through fourth light beam portions A₁, B₁, C₁, and D₁, of the light beam LB passed through the objective lens 17, after having been reflected/diffracted from an information stream of the recording medium 10, and outputs first, second, fourth, and third detection signals S₇₁, S₇₂, S₇₄, and S₇₃. The signal processor 750 outputs the sum of a phase difference between the first and second detection signals S₇₁ and S₇₂, and a phase difference between the third and fourth detection signals S₇₃ and S₇₄.

The first through fourth light beam portions A₁, B₁, C₁, and D₁ are formed as a 2× 2 matrix, and are arranged counterclockwise in order, wherein the row and column of the matrix are parallel to the R and T directions, respectively. It is preferable that the first and second light beam portions A₁ and B₁ are located in the same column, and the third and fourth light beam portions C₁ and D₁ are located in the other column.

In the present embodiment, the first and second light beam portions A₁ and B₁ are separated a predetermined distance from each other in the T direction, and the third and fourth light beam portions C₁ and D₁ are separated a predetermined distance from each other in the T direction. In other words, assuming that the light beam LB are divided into a first outer portion, an intermediate portion, and a second outer portion in the direction T, the photodetecting unit receives the first and second outer portions of the light beam LB as the divided first through fourth light beam portions A₁, B₁, C₁, and D₁. The first through fourth light beam portions A₁, B₁, C₁, and D₁ correspond to the first through fourth outer portions A₁, B₁, C₁, and D₁ illustrated in the seventh embodiment with reference to Figure 9.

Thus, as shown in Figure 22, the photodetecting unit of the eighth embodiment of the error signal detection apparatus according to the present invention may include a photodetector 730 formed as a 2× 4 matrix having eight sections. Here, the row and column of the matrix are parallel to the R and T directions, respectively. The first through fourth light beam portions A₁, B₁, C₁, and D₁ are detected by the first through fourth outer light beam receiving sections A₁, B₁, C₁, and D₁ of the photodetector 730.

The signal processor 750 includes a first phase comparator 751 for receiving the first and second detection signals S₇₁ and S₇₂ detected from the first and second light beam portions A₁ and B₁, a second phase comparator 753 for receiving the third and fourth detection signals S₇₃ and S₇₄ detected from the fourth and third light beam portions D₁ and C₁, and a matrix circuit 755.

The matrix circuit 755 receives first and second phase comparison signals P₇₁ and P₇₂ output from the first phase comparator 751, and third and fourth phase comparison signals P₇₃ and P₇₄ output from the second phase comparator 753, and outputs a differential signal between the sum of the first and third phase comparison signals P₇₁ and P₇₃, and the sum of the second and fourth phase comparison signals P₇₂ and P₇₄, as a defocus error signal dFE (= P₇₁+P₇₃-P₇₂-P₇₄).

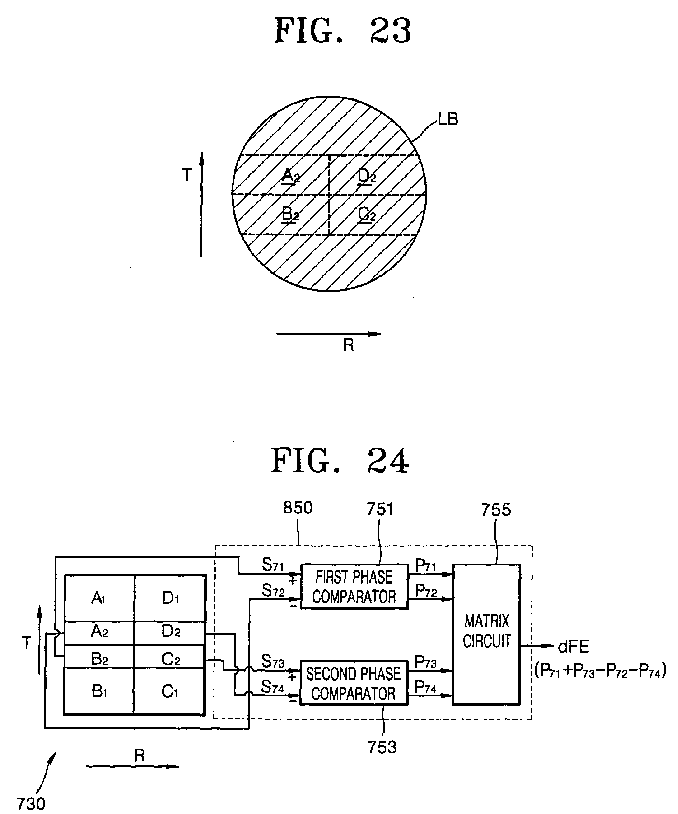

As shown in Figure 23, a ninth embodiment of the error signal detection apparatus according to the present invention may use the intermediate light beam portion of the light beam LB, instead of the first and second outer portions, to detect a defocus error signal. The ninth embodiment of the error signal detection apparatus according to the present invention detects the intermediate light beam portion of the light beam LB as divided first through fourth light beam portions A₂, B₂, C₂, and D₂, and detects a defocus error signal from the first through fourth light beam portions A₂, B₂, C₂, and D₂. Here, the first through fourth light beam portions A₂, B₂, C₂, and D₂ of the intermediate light beam portion of the light beam LB correspond to the inner portions of the first through fourth light beam portions A₁, B₁, C₁, and D₁ in the T direction, which form the first and second outer portions of the light beam LB. The first through fourth light beam portions A₂, B₂, C₂, and D₂ correspond to the first through fourth inner portions A₁, B₁, C₁, and D₁ illustrated in the seventh embodiment with reference to Figure 19.

When the photodetector 730 having eight sections, as shown in Figure 22, is used as a photodetecting unit, the first through fourth light beam portions A₁, B₁, C₁, and D₁ corresponding to the intermediate light beam portion of the light beam LB are detected by the first through fourth inner light beam receiving sections A₂, B₂, C₂, and D₂, as shown in Figure 24. The first through fourth inner light beam receiving sections A₂, B₂, C₂, and D₂ are located inward the first through fourth outer light beam receiving sections A₁, B₁, C₁, and D₁ of Figure 22 in the T direction. The second, first, third and fourth detection signals S₇₂, S₇₁, S₇₃, and S₇₄ detected by the first through fourth inner light beam receiving sections A₂, B₂, C₂, and D₂ are processed by the signal processor 850 in the same way as described with reference to Figure 22, and are output as a defocus error signal dFE.

The structure of the signal processor 850 is the same as that of the signal processor 750 of Figure 22, except that the second, first, third, and fourth detection signals S₇₂, S₇₁, S₇₃, and S₇₄ from the first through fourth inner light beam receiving sections A₂, B₂, C₂, and D₂ are input to the signal processor 850. For this reason, the constituent elements of the signal processor 850 are denoted by the same reference numerals as those used for the signal processor 750, and a description of the structure of the signal processor 850 will not be provided here.

Like the error signal detection apparatus according to the seventh embodiment of the present invention, the error signal detection apparatuses according to the eighth and ninth embodiments of the present invention, which have the above configurations, can detect a defocus error signal without being affected by radial tilt, tangential tilt, and detrack.

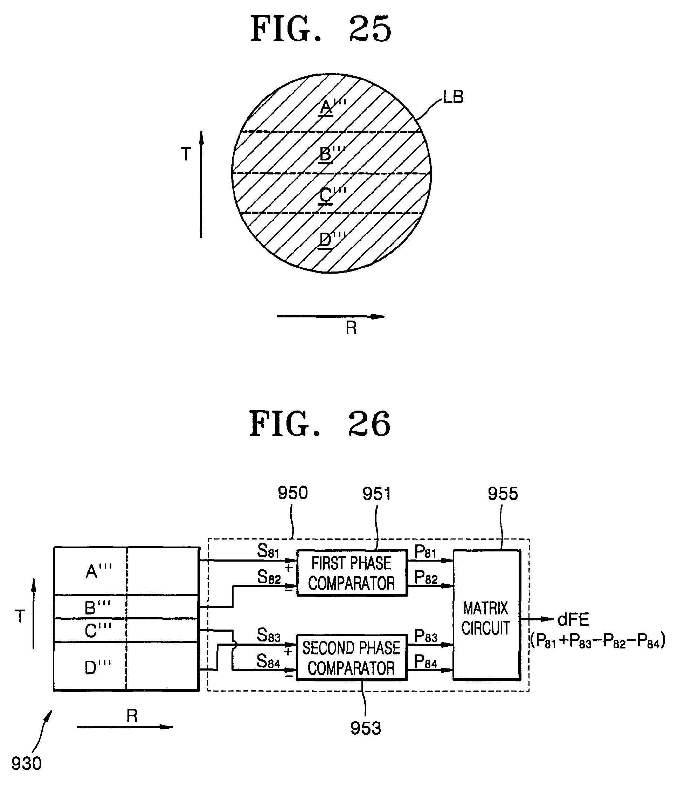

Referring to Figures 25 and 26, a tenth embodiment of the error signal detection apparatus for an optical recording/reproducing system according to the present invention includes a photodetecting unit and a signal processor 950 and detects a defocus error signal. The photodetecting unit divides the light beam LB passed through the objective lens 17, after having been reflected/diffracted from an information stream of the recording medium 10, into first through fourth light beam receiving sections A''',B''',C''', and D''' in the T direction, and detects and outputs first, second, fourth, and third detection signals S₈₁, S₈₂, S₈₄, and S₈₃. The signal processor 950 outputs the sum of a phase difference between the first and second detection signals S₈₁ and S₈₂, and a phase difference between the third and fourth detection signals S₈₃ and S₈₄.

As shown in Figure 26, the photodetecting unit of the tenth embodiment of the error signal detection apparatus according to the present invention may include a photodetector 930 having first through fourth light beam receiving sections A''',B''',C''', and D''', which divide the light beam LB into the first through fourth light beam portions A''',B''',C''', and D''' in the T direction, and separately and photoelectrically convert the first through fourth light beam portions A''',B''',C''', and D'''. The first through fourth light beam receiving sections A''', B''',C''', and D'' are short in the T direction with large widths in the R direction. The first through fourth light beam receiving sections A''',B''',C''', and D''' separately and photoelectrically convert the first through fourth light beam portions A''',B''',C''', and D''' of the light beam LB incident after having been reflected/diffracted from the recording medium 10, and output the first, second, fourth, and third detection signals S₈₁, S₈₂, S₈₃, and S₈₄.

Here, the light beam LB is a main light beam used for recording information on the recording medium, or reproducing information from the recording medium, and the photodetector 930 is also used for detecting an information signal from the recording medium 10. In this case, it is preferable that the first through fourth light beam receiving sections A''',B''',C''', and D''' of the photodetector 930 are further divided into two in the T direction along the dashed lines of Figure 26, so that the photodetector 930 has eight light beam receiving sections.

The signal processor 950 includes a first phase comparator 951 which receives the first and second detection signals S₈₁ and S₈₂, a second phase comparator 953 which receives the third and fourth detection signals S₈₃ and S₈₄, and a matrix circuit 955. The matrix circuit 955 receives the first and second phase comparison signals P₈₁ and P₈₂ output from the first phase comparator 953, and the third and fourth phase comparison signals P₈₂ and P₈₄ output from the second phase comparator 953, and outputs a differential signal between the sum of the first and third phase comparison signals P₈₁ and P₈₃, and the sum of the second and fourth phase comparison signals P₈₂ and P₈₄, as a defocus error signal dFE (= P₈₁+P₈₃-P₈₂-P₈₄).

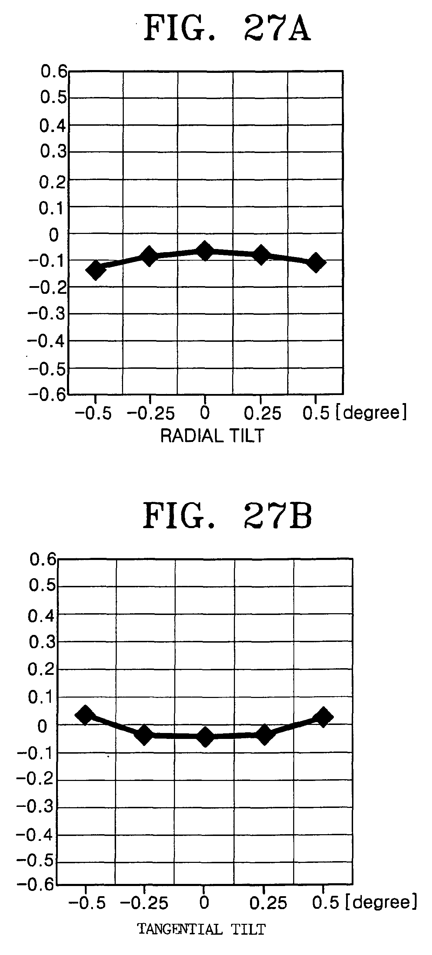

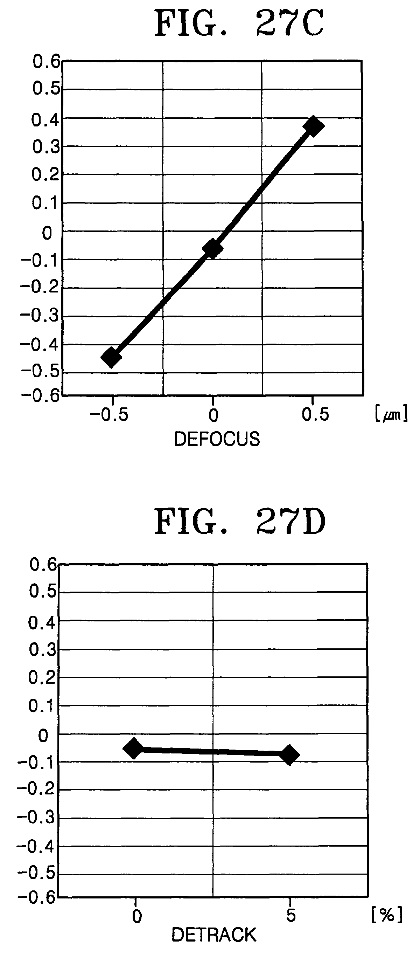

Figures 27A through 27D are graphs illustrating the signal dFE output from the tenth embodiment of the error signal detection apparatus according to the present invention, when a radial tilt, tangential tilt, defocus, and detrack occur, respectively. The signal dFE detected by the error signal detection apparatus according to the tenth embodiment of the present invention is almost unaffected by radial tilt, tangential tilt, and detrack, as shown in Figures 27A, 27B, and 27D, and is greatly affected by only defocus, as shown in Figure 27C.

Thus, a defocus error signal can be accurately detected without being affected by radial tilt, tangential tilt, and detrack, using the tenth embodiment of the error signal detection apparatus according to the present invention having the above structure.

A DC offset of the defocus error signals dFE detected by the error signal detection apparatuses according to the fourth, fifth, and seventh through tenth embodiments of the present invention can be removed by adjusting a light beam division ratio of the photodetecting unit, or using a circuit.

The above error signal detection apparatuses according to the present invention, which are for detecting a defocus error signal, use the light beam LB passed through the objective lens 17 after having been reflected/diffracted from an information stream of the recording medium 10.

When a defocus component of an optical recording/reproducing system is detected using the defocus error signal detection apparatuses according to the present invention, which are described with reference to Figures 12 through 29, a recording medium which is formed to have a defocus error signal value whose level lower than a predetermined level in the defocus-free state where no defocus occurs, which is detected by the signal processors 350, 450, 550, 650, 750, 850, 950, and 1050 according to the present invention for detecting a defocus error signal, is used.

Assuming that a channel clock interval of an information signal recorded on a recording medium is T, and an average time interval of the detection signals input to the phase comparators of the signal processor 350, 450, 550, 650, 750, 850, 950, or 1050, is Δt, it is preferable that the recording medium may be designed such that, in the defocus-free state, Δt/T represents a defocus error signal value which is 0.5-1.0 with respect to the range of the depth of focus of the light beam LB used in the optical recording/reproduction system.

The average time interval Δt refers to the average of time intervals of the detection signals input to the phase comparators which have been detected from an information stream (for example, from 3T to 14T record marks or pits) by scanning the light beam LB on the same. In general, the range of the depth of focus is substantially determined by λ/NA², where λ is the wavelength of the light source used, and NA is the numerical aperture of the objective lens.

The error signal detection apparatuses according to the fourth through tenth embodiments of the present invention, which have the above configurations, detect a defocus error signal by a phase detection method, so that the defocus error signal can be detected with high sensitivity, irrespective of the intensity of light beam reflected from the recording medium.

The detected defocus error signal can be used to remove any defocus component in initializing an optical recording/reproducing system, and to compensate for a component which cannot be easily detected as an S-curve in a recording medium containing a large deflection component.

The error signal detection apparatuses according to the fourth through tenth embodiments of the present invention detect a defocus error signal, for example, by phase detection from the light beam LB diffracted from pits, so that a defocus component can be detected irrespective of the type of a recording medium, or the layer of a recording medium having a plurality of layers.

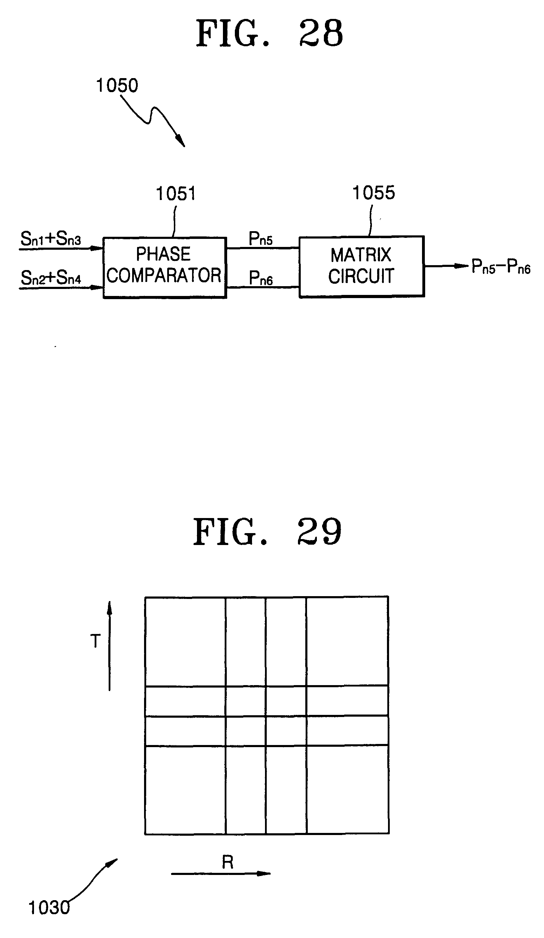

Although, in the error signal detection apparatuses according to the first through ninth embodiments of the present invention, which have the above structures, the signal processor 50, 150, 250, 350, 450, 550, 650, 750, 850, or 950 is constructed to process the individual first through fourth detection signals Sₙ₁, Sₙ₂, Sₙ₃, and Sₙ₄ (where n= 1, 2, ..., 8), which are input to the phase comparators of the error signal detection apparatuses according to the first through ninth embodiments, a signal processor 1050 may be constructed to process the sum of the first and third detection signals Sₙ₁ and Sₙ₃, and the sum or the second and fourth detection signals Sₙ₂ and Sₙ₄, as shown in Figure 28. In this case, the signal processor 1050 includes a phase comparator 1051 for receiving the sum signals (Sₙ₁+Sₙ₃) and (Sₙ₂+Sₙ₄) and outputting a phase comparison signal Pₙ₅ if the phase of the sum signal (Sₙ₁+Sₙ₃) leads that of the sum signal (Sₙ₂+Sₙ₄), and a phase comparison signal Pₙ₆ if the phase of the sum signal (Sₙ₂+Sₙ₄) leads that of the sum signal (Sₙ₁+Sₙ₃), and a matrix circuit 1055 for outputting a differential signal between the phase comparison signals Pₙ₅ and Pₙ₆.

Although it is described as that the error signal detection apparatuses according to the present invention detect a particular kind of error signal, i.e., a tangential tilt error signal, radial tilt error signal, or defocus error signal, the error signal detection apparatuses according to the first through tenth embodiments of the present invention can be combined such that the error signal detection apparatuses can simultaneously detect two or three kinds of error signal. For example, if the error signal detection apparatuses according to the present invention have a photodetecting unit that detects the light beam reflected/diffracted from a recording medium as eight divided light beam portions in a 2× 4 matrix, which is a combination of the first and fourth embodiments, or of the second and fourth embodiments according to the present invention, both tangential tilt and defocus error signals can be detected.

Also, if the error signal detection apparatuses according to the present invention have a photodetecting unit that detects the light beam reflected/diffracted from a recording medium as eight divided light beam portions in a 4× 2 matrix, which is a combination of the third and seventh embodiments, or of third and ninth embodiments according to the present invention, both radial tilt and defocus error signals can be detected.

Also, if the error signal detection apparatuses according to the present invention have a photodetecting unit that detects the light beam reflected/diffracted from a recording medium as sixteen divided light beam portions in a 4× 4 matrix, which may be implemented by a photodetector 1030 having sixteen divided sections as a combination of the previous embodiments, as shown in Figure 29, tangential tilt, radial tilt, and defocus error signals can be detected.

In the embodiments described previously, it is described that a photodetector having divided sections is used as a photodetecting unit. However, the photodetecting unit may be constructed of a light beam dividing element (not shown) and a photodetector (not shown) corresponding to the light beam dividing element. In this case, the light beam dividing element may be a diffraction element having a plurality of diffraction portions, for example, a hologram optical element (HOE), such that the light beam LB reflected/diffracted from the recording medium 10 are divided into a plurality of light beam portions, as shown in Figures 3, 6, 9, 12, 15, 17, 12, 21 and/or 25. Each of the diffraction portions diffracts a corresponding incident light beam portion into +1st or -1st order diffracted beam and transmits the diffracted beam, so that the light beam LB is divided into a plurality of light beam portions. The direction of diffraction patterns, and the pitch interval are designed in associated with the structure of a photodetector.

As described previously, the embodiments of the error signal detection apparatuses according to the present invention, are appropriate when any optical element which affects the distribution of intensity of the light beam reflected/diffracted from the recording medium and is disposed between the exit pupil of the objective lens 17 and the photodetecting unit, is not installed.

In the case where an optical element such as a lens and/or an HOE, which affects the distribution of intensity of the light beam reflected/diffracted from the recording medium 10, is interposed between the objective lens 17 and the photodetecting unit, the structures of the photodetecting unit and the signal processor of an error signal detection apparatus according to the present invention can be varied corresponding to the variation of distribution of the light beam caused by the optical element. In this case, i.e., when a predetermined optical element that affects the distribution of intensity of the light beam is interposed between the objective lens 17 and the photodetecting unit, the error signals detected by the appropriately modified signal processor are the same as those described in the above embodiments.

As previously described, the error signal detection apparatuses according to the present invention can accurately detect a tangential tilt error signal without being affected by radial tilt, defocus, and detrack; a radial tilt error signal without being affected by tangential tilt, defocus, and detrack; and/or a defocus error signal without being affected by tangential tilt, radial tilt, and detrack.

While this invention has been particularly shown and described with reference to preferred embodiments thereof, it will be understood by those skilled in the art that various changes in form and details may be made thereto without departing from the spirit and scope of the invention as defined by the appended claims.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extend to any novel one, or any novel combination, of the features disclosed in this specification (including any accompanying claims, abstract and drawings), or to any novel one, or any novel combination, of the steps of any method or process so disclosed.

## Claims

1. An error signal detection apparatus for an optical recording/reproducing system, the apparatus comprising:
a photodetecting unit (30) for dividing at least a part of a light beam passed through an objective lens (17) after having been reflected/diffracted from an information stream of a recording medium (10) into a plurality of light beam portions (A,B,C,D), and detecting the plurality of light beam portions to form detection signals (S₁₁,S₁₂,S₁₃,S₁₄); and
a signal processor (50) for detecting a tangential error signal by detecting phase differences between the detection signals (S₁₁,S₁₂,S₁₃,S₁₄) from the plurality of light beam portions (A,B,C,D).

2. The error signal detection apparatus of claim 1, wherein the photodetecting unit (30) divides the light beam into first through fourth light beam portions (A,B,C,D) in a direction corresponding to the radial direction of the recording medium, and detects and outputs first, second, fourth, and third detection signals (S₁₁,S₁₂,S₁₃,S₁₄) from the first through fourth light beam portions; and the signal processor (50) detects and outputs the tangential tilt error signal as the sum of a phase difference between the first and second detection signals (S₁₁,S₁₂), and a phase difference between the third and fourth detection signals (S₁₃,S₁₄).

3. The error signal detection apparatus of claim 1, wherein the photodetecting unit (30) divides a part of the light beam with respect to an axis crossing an optical axis (C) parallel to a tangential direction (T) of the recording medium (10) into first through fourth light beam portions (A'B'C'D') in directions corresponding to the radial (R) and tangential (T) directions of the recording medium, and detects the first through fourth light beam portions to form first through fourth detection signals (S₂₁,S₂₂,S₂₃,S₂₄), the first through fourth light beam portions arranged counterclockwise or clockwise in order in a 2× 2 matrix, wherein the row and column of the matrix are parallel to directions corresponding to the radial and tangential directions of the recording medium, respectively; and
the signal processor (50) detects and outputs the tangential tilt error signal as the sum of a phase difference between the first and second detection signals (S₂₁,S₂₃) from the first and third light beam portions (A',C'), and a phase difference between the third and fourth detection signals (S₂₃,S₂₄) from the second and fourth light beam portions (B',D').

4. An error signal detection apparatus for an optical recording/reproduction apparatus, the apparatus comprising:
a photodetecting unit (330) for dividing at least a part of a light beam passed through an objective lens after having been reflected/diffracted from an information stream of a recording medium into a plurality of light beam portions, and detecting the plurality of light beam portions; and
a signal processor (350) for detecting a defocus error signal by detecting phase differences between detection signals from the plurality of light beam portions.

5. The error signal detection apparatus of claim 4, wherein the photodetecting unit (330) divides the light beam into first through fourth light beam portions and detects first, second, fourth, and third detection signals from the first through fourth light beam portions, the first through fourth light beam portions arranged counterclockwise or clockwise in order in a 2× 2 matrix, wherein the row and column of the matrix are parallel to directions corresponding to the radial and tangential directions of the recording medium, respectively; and
the signal processor (350) detects and outputs the defocus error signal as the sum of a phase difference between the first and second detection signals (S₄₁,S₄₂) from the first and second light beam portions (A'₁,B'₁) located in the same column of the matrix, and a phase difference between the third and fourth detection signals (S₄₃,S₄₄) from the fourth and third light beam portions (D'₁,C'₁) located in the other column of the matrix.

6. The error signal detection apparatus of claim 5, wherein, when the light beam is divided into a first outer portion, an intermediate light beam portion, and a second outer portion in a direction corresponding to the radial direction, the photodetecting unit divides the first and second outer portions of the light beam into first through fourth light beam portions (A'₁,B'₁,C'₁,D'₁), and detects the first through fourth light beam portions.

7. The error signal detection apparatus of claim 5, wherein, when the light beam is divided into a first outer portion, an intermediate light beam portion, and a second outer portion in a direction corresponding to the radial direction of the recording medium, the photodetecting unit divides the intermediate light beam portion of the light beam into first through fourth light beam portions (A'₂,B'₂,C'₂,D'₂), and detects the first through fourth light beam portions.

8. The error signal detection apparatus of any of claims 1 through 7, wherein the photodetecting unit (30) comprises a photodetector having eight light beam receiving sections in a 2× 4 matrix, which separately perform photoelectrical conversion.

9. The error signal detection apparatus of any preceding claims, wherein the photodetecting unit is constructed such that the photodetecting unit divides the light beam into the first through fourth light beam portions and detects the first through fourth light beam portions.

10. The error signal detection apparatus of claim 9, wherein the photodetecting unit comprises a photodetector having first through fourth light receiving sections for receiving the first through fourth light beam portions, respectively.

11. The error signal detection apparatus of claim 4, wherein, when the light beam is divided into a first outer portion, an intermediate light beam portion, and a second outer portion in a direction corresponding to the tangential direction of the recording medium, the photodetecting unit (730) divides the first and second outer portions into first through fourth outer portions (A₁,B₁,C₁,D₁) in a direction corresponding to the tangential direction of the recording medium, which are arranged counterclockwise or clockwise in order, and detects the first through fourth outer portions and/or the intermediate light beam portion into first through fourth inner portions (A₂,B₂,C₂,D₂) in directions corresponding to the radial and tangential directions of the recording medium, which are arranged counterclockwise or clockwise in order, and detects the first through fourth inner portions, and
the signal processor (750) detects the defocus error signal as the sum of a phase difference between a first detection signal (S₇₁) from the first outer portion and/or the second inner portion and a second detection signal (S₇₂) from the second outer portion and/or the first inner portion, and a phase difference between a third detection signal (S₇₃) from the third inner portion and/or the fourth outer portion and a fourth detection signal (S₇₄) from the third outer portion and/or the fourth inner portion.

12. The error signal detection apparatus of claim 11, wherein the photodetecting unit (730) divides the first and second outer portions of the light beam into first through fourth outer portions (A₁,B₁,C₁,D₁) and detects the first through fourth outer portions, and the first to fourth outer portions form a 2×2 matrix, wherein the row and column of the matrix are parallel to directions corresponding to the radial and tangential directions of the recording medium, and the first and fourth outer portions are located in different columns; and
the signal processor (750) receives and processes the first, second, fourth, and third detection signals output from the first through fourth outer portions.

13. The error signal detection apparatus of claim 11, wherein the photodetecting unit (730) divides the intermediate portion of the light beam into the first through fourth inner portions (A₂,B₂,C₂,D₂), and detects the first through fourth inner portions, and the first through fourth inner portions form a 2× 2 matrix, wherein the row and column of the matrix are parallel to directions corresponding to the radial and tangential directions of the recording medium, and the first and fourth inner portions are located in different columns; and
the signal processor (850) receives and processes the second, first, third, and fourth detection signals output from the first through fourth inner portions.

14. The error signal detection apparatus of claim 11, wherein the photodetecting unit (330) divides the first and second outer portions of the light beam into the first through fourth outer portions (A₁,B₁,C₁,D₁) arranged counterclockwise or clockwise in order parallel to a direction corresponding to the tangential direction of the recording medium, and detects the first through fourth outer portions; and
the photodetecting unit divides the intermediate light beam portion into the first through fourth inner portions (A₂,B₂,C₂,D₂) arranged counterclockwise or clockwise in order parallel to directions corresponding to the radial and tangential directions of the recording medium, and detects the first through fourth inner portions, wherein the first through fourth outer and inner portions are arranged in a 4×2 matrix, the row and column of the matrix are parallel to directions corresponding to the radial and tangential directions of the recording medium, and the first and fourth outer portions are located in different columns, and
the signal processor (350) outputs the sum of a phase difference between the first detection signal, which is the sum of detection signals from the first outer portion and the second inner portions, and the second detection signal, which is the sum of detection signals from the second outer portion and the first inner portion; and
a phase difference between the third detection signal, which is the sum of detection signals from the third inner portion and the fourth outer portion, and the fourth detection signal, which is the sum of detection signals from the third outer portion and the fourth inner portion.

15. The error signal detection apparatus of claim 4, wherein the photodetecting unit (930) divides the light beam into first through fourth light beam portions (A''',B''',C''',D''') in a direction corresponding to the tangential direction of the recording medium, and detects and outputs first, second, fourth, and third detection signals from the first through fourth light beam portions, and
the signal processor (950) detects and outputs the defocus error signal as the sum of a phase difference between the first and second detection signals, and a phase difference between the third and fourth detection signals.

16. The error signal detection apparatus of any of claims 3 through 7, and claims 9 through 15, wherein the error signal detection apparatus detects a defocus component in the optical recording/reproducing system with a recording medium whose defocus error signal level detected by the signal processor in a state where no defocus occur is a predetermined level or less.

17. The error signal detection apparatus of claim 16, wherein, when a channel clock interval of an information signal recorded on the recording medium is T, and an average time interval of the detection signals input to the phase comparator of the signal processor is Δt, the recording medium is designed such that, in the state where no defocus occurs, Δt/T represents a defocus error signal value of 0.5-1.0 with respect to the range of the depth of focus of the light beam LB used in the optical recording/reproduction system.

18. An error signal detection apparatus for an optical recording/reproducing system, the apparatus comprising:
a photodetecting unit (230) for dividing at least a part of a light beam passed through an objective lens after having been reflected/diffracted from an information stream of a recording medium into a plurality of light beam portions, and detecting the plurality of light beam portions; and
a signal processor (250) for detecting a radial tilt error signal by detecting phase differences between detection signals from the plurality of light beam portions.

19. The error signal detection apparatus of claim 18, wherein the photodetecting unit divides the light beam into first through fourth inner portions (A₂,B₂,C₂,D₂) arranged counterclockwise or clockwise in directions corresponding to the radial and tangential directions of the recording medium, and into first through fourth outer portions (A₁,B₁,C₁,D₁) which are outward in the first through fourth inner portions in a direction corresponding to the tangential direction of the recording medium, and detects the first through fourth inner and outer portions, wherein the first through fourth outer and inner portions are arranged in a 4×2 matrix, the row and column of the matrix are parallel to directions corresponding to the radial and tangential directions of the recording medium, and the first inner and outer portions are arranged in a column different from the fourth inner and outer portions, and
when the sum of detection signals from the first outer portion and the fourth inner portion is a first detection signal (S₃₁), the sum of detection signals from the fourth outer portion and the first inner portion is a second detection signal (S₃₂), the sum of detection signals from the second inner portion and the third outer portion is a third detection signal (S₃₃), and the sum of detection signals from the third inner portion and the second outer portion is a fourth detection signal (S₃₄), the signal processor (250) detects the radial tilt error signal as the sum of a phase difference between the first and second detection signal, and a phase difference between the third and fourth detection signals.

20. The error signal detection apparatus of claim 19, wherein the first outer portion is located in the first row and first column of the 4×2 matrix of the light beam.

21. The error signal detection apparatus of any of claims 11 through 15, and claims 18 through 20, wherein the photodetecting unit comprises a photodetector having eight light beam receiving sections in a 4×2 matrix, wherein the row and column of the matrix are parallel to directions corresponding to the radial and tangential directions of the recording medium.

22. The error signal detection apparatus of any of claims 1 through 7, claims 9 through 15, and claims 18 through 20, wherein the photodetector unit comprises a photodetector having sixteen light beam receiving sections in a 4×4 matrix, wherein the row and column of the matrix are parallel to directions corresponding to the radial and tangential directions of the recording medium.

23. The error signal detection apparatus of any of claims 1 through 7, claims 9 through 15, and claims 18 through 20, wherein the signal processor comprises:
a first phase comparator for comparing the phases of first and second detection signals, and outputting a first phase comparison signal when the phase of the first detection signal leads the phase of the second detection signal, and a second phase comparison signal when the phase of the second detection signal leads the phase of the first detection signal;
a second phase comparator for comparing the phases of third and fourth detection signals, and outputting a third phase comparison signal when the phase of the third detection signal leads the phase of the fourth detection signal, and a fourth phase comparison signal when the phase of the fourth detection signal leads the phase of the third detection signal, and a matrix circuit for receiving the first through fourth phase comparison signals, and outputting a differential signal between the sum of the first and third phase comparison signals, and the sum of the second and fourth phase comparison signals.

24. The error signal detection apparatus of any of claims 1 through 7, claims 9 through 15, and claims 18 through 20, wherein the signal processor detects a phase difference between a fifth detection signal which is the sum of the first and third detection signals, and a sixth detection signal which is the sum of the second and fourth detection signals.

25. The error signal detection apparatus of claim 24, wherein the signal processor comprises:
a phase comparator for comparing the phases of the fifth and sixth detection signals, and outputting a fifth phase comparison signal when the phase of the fifth detection signal leads the phase of the sixth detection signal, and a sixth phase comparison signal when the phase of the sixth detection signal leads the phase of the fifth detection signal; and
a matrix circuit for receiving the fifth and sixth phase comparison signals and outputting a differential signal between the fifth and sixth phase comparison signals.
